# EUROPEAN PATENT SPECIFICATION

(11) **EP 3 352 314 B1**
(45) Date of publication and mention of the grant of the patent: **27.05.2020**
(21) Application number: 17180739.9
(22) Date of filing: 11.07.2017
(51) Int. Cl.: H02G 11/00

(54) **CABLES AND STACKED CABLES INCLUDING MULTI-JOINT SUPPORTING MEMBER**
KABEL UND GESTAPELTE KABEL MIT MEHRGELENKIGEM TRAGELEMENT
CÂBLES ET CÂBLES EMPILÉS COMPRENANT UN ÉLÉMENT DE SUPPORT MULTI-ARTICULATIONS

(30) Priority: 23.01.2017 KR 20170010134; 08.02.2017 WO PCT/KR2017/001352
(43) Date of publication of application: 25.07.2018
(73) Proprietor: Thomas Engineering Co., Ltd., Cheongju-si, Chungcheongbuk-do 28127 (KR); Sung, Ho Churl, Cheongju-si, Chungcheongbuk-do 28124 (KR)
(72) Inventor: SUNG, Ho Churl, 28124 Chungcheongbuk-do (KR)
(74) Representative: Groth & Co. KB

(56) References cited:
- KR-A- 20160 121 936
- KR-A- 20160 125 774
- KR-B1- 101 640 021
- US-A1- 2012 228 437

## Description

### TECHNICAL FIELD

The present invention relates to a cable which is used for a machine tool, an electronic device, an industrial robot, a conveying machine, etc., and which performs power feeding, liquid feeding, air feeding, etc., to a moving machine or a movable part of the moving machine and particularly, to cables and stacked cables including a clamp which may facilitate bending and straight posture of an electric wire and fixes a multi-purpose supporting member, electric wires, and air hoses according to the need of a user.

### BACKGROUND ART

When a power cable is connected to supply power to movable bodies including a machine tool, a civil machine, a conveying device, etc., or a hose is connected to provide oil pressure or air pressure, unreasonable twisting or tensile force is caused on the power cable or hose due to the movement of the movable body, and as a result, the power cable or the hose is damaged or an external appearance is cluttered.

In order to solve the problem, a protection guide device is used, which supports the cable or the hose and induces and guides the cable or the hose.

For example, in order to prevent twisting or distortion, a protection guide device is presented, which accommodates the power cable or hose therein to protect the power cable or hose and disposes multi-joint supporting members at both sides to assist maintaining a straight state or a bending state of the cable or hose, but it is a reality that a sufficient effect as desired is not yet obtained.

In a cable protecting and guiding device in the related art, since a flexible material configuring the supporting member is stainless steel or a leaf spring, a bending radius may not be maintained when the bending posture is shown, and the bending radius is increased, and as a result, the supporting member contacts an obstacle, etc. at a proximate position. Therefore, it is difficult to install the supporting member in a predetermined space. In particular, when a stainless steel material is used as the flexible material, there is a problem that fatigue breakage is caused by long-term use, and as a result, the supporting member is insulated and it is impossible to use the supporting member.

In addition, the flexible member constituting the supporting member is made of stainless steel or plate spring and since the stainless steel or the leaf spring cannot be easily cut and attached, when the length of the supporting member is changed to a long length, the supporting member needs to be changed to new another supporting member and the supporting member is wasted, and furthermore, twisted rigidity is low at the time of bending the supporting member, so that resonance is caused and the operation of the bending posture and the straight posture becomes unstable.

In addition, the cable in the related art has a problem in that there is a limit in implementing a cable to which a sufficient need of a user is reflected because only the electric wire and the multi-joint supporting member are inserted and used.

Prior art document KR 101 640 021 B1 discloses a cable having a multi-purpose space portion.

Prior art document US 2012/0228437 A1 relates to an articulated cable protection and guide apparatus for protecting flexible cables and hoses.

Prior art document KR 20160125774 A discloses a protection unit for cable supporting with hose.

### SUMMARY OF THE INVENTION

Therefore, the present invention is contrived to solve the problem in the related art and the present invention has been made in an effort to provide cables and stacked cables including a multi-joint supporting member, which can facilitate maintaining bending and straight posture of an electric wire and an air hose and prevent twisting and distortion of the electric wire and the air hose and variously select and dispose the types and the number of supporting members as necessary or facilitate the disposition of the electric wire and the air hose and stack the electric wires and air hoses in plural by using a clamp.

The present invention provides cables including a multi-joint supporting member, including: a pod 200 configured to include a plurality of supporting member inserting portions 210 formed on the pod 200 and a plurality of electric wire insertion portions 220 formed on the pod 200; a plurality of multi-joint supporting members 211 inserted into the supporting member inserting portions 210 of the pod 200; a plurality of electric wire 221 inserted into the electric wire inserting portions 220 of the pod 200; and a clamp 300 configured to include a first clamp 310 accommodating one end of the multi-joint supporting member 211 and fixing and joining one end of the electric wire 221 so as to prevent the one end of the electric wire 221 from moving horizontally and a second clamp 320 accommodating the other end of the multi-joint supporting member 211 and fixing and joining the other end of the electric wire 221 so as to prevent the other end of the electric wire from moving horizontally; and one or more air hoses 222 inserted into the electric wire inserting portions 220 of the pod 200; and
the clamp 300 configured to prevent the one end of the air hose 222 from moving horizontally and the second clamp 320 fixing and joining the air hose 222 so as to prevent the other end from moving horizontally; and
the unit joint 212 at one end of the multi-joint supporting member 211 is connected to the first clamp 310 and the unit joint 212 at the other end of the multi-joint supporting member 211 is connected to the second clamp 320;
wherein the first clamp 310 includes: an upper clamp 330 including clamp ends 500 formed at both ends of the upper clamp 330 and joining holes 510 penetrating the clamp ends 500, a lower clamp 340 including the clamp ends 500 formed at both ends of the lower clamp 340 and joining holes 510 penetrating the clamp ends 500, characterized by guide grooves 520 to which the first supporting member connecting means 215 and a fixation member 700 are slidably joined and connected to a lower side of the upper clamp 330, the first supporting member connecting means 215 connected with one end of the multi-joint supporting member 211 and slidably joined to the guide groove 520, and a fixation member 700 preventing the first supporting member connecting means 215 from slidably moving after the first supporting member connecting means 215 is position-fixed on the guide groove 520, and the second clamp (320) includes:
an upper clamp 330 including clamp ends 500 formed at both ends of the upper clamp 330 and joining holes 510 penetrating the clamp ends 500, a lower clamp 340 including the clamp ends 500 formed at both ends of the lower clamp 340, the joining holes 510 penetrating the clamp ends 500, and the guide grooves 520 to which the second supporting member connecting means 216 and the fixation member 700 are slidably joined and connected to the lower side of the upper clamp 330, a second supporting member connecting means 216 connected with the other end of the multi-joint supporting member 211 and slidably joined to the guide groove 520, and a fixation member 700 preventing the second supporting member connecting means 216 from slidably moving after the second supporting member connecting means 216 is position-fixed on the guide groove 520, and a fastening means penetrates the joining hole 510 and the upper and lower clamps 330 and 340 are joined to each other to fix the supporting members 211 and the electric wires 221 and conveying projections 215b, 216b, and 700b are formed on the first and second supporting member connecting means 215 and 216 and one surface of the fixation member 700 and the conveying projections 215b, 216b, and 700b are inserted into the guide groove 520, and as a result, the first and second supporting member connecting means 215 and 216 and the fixation member 700 are slidably joined to each other in the guide groove (520),
wherein the first and second clamps 310 and 320 further include one or more fixation bars 800 inserted into the guide groove 520 in order to prevent the first and second supporting member connecting means 215 and 216 from moving after the first and second supporting member connecting means 215 and 216 and the fixation member 700 are position-fixed on the guide groove 520.

Yet another exemplary embodiment of the present invention provides stacked cables including a multi-joint supporting member disclosed in any one of claims 1-5 are stacked in multiple stacking structures, the first clamps 310 constituted in respective laers are joined by joining means and the second clamps 320 constituted in the respective layers are also be joined by the joining means. The stacked cables further including: a stacked pod 230 including one or more first pods 231 having a plurality of supporting member inserting portions 210 and one or more second pods 232 having a plurality of electric wire inserting portions 220; a plurality of multi-joint supporting members 211 inserted into the supporting member inserting portions 210; a plurality of electric wires 221 inserted into the electric wire inserting portions 220; and a stacked clamp 400 configured to include a first stacked clamp 410 configured to include a stacked upper clamp 430, a stacked lower clamp 450, and a plurality of stacked intermediate clamps 440, and a second stacked clamp 420 configured to include the stacked upper clamp 430, the stacked lower clamp 450, and the plurality of stacked intermediate clamps 440.

Still yet another exemplary embodiment of the present invention provides stacked cables including a multi-joint supporting member, including: a stacked pod 230 including one or more first pods 231 having a plurality of supporting member inserting portions 210 and one or more second pods 232 having a plurality of electric wire inserting portions 220; a plurality of multi-joint supporting members 211 inserted into the supporting member inserting portions 210; a plurality of electric wires 221 inserted into the electric wire inserting portions 220; one or more air hoses 222 inserted into the electric wire inserting portions 220; and a stacked clamp 400 configured to include a first stacked clamp 410 configured to include a stacked upper clamp 430, a stacked lower clamp 450, and a plurality of stacked intermediate clamps 440, and a second stacked clamp 420 configured to include the stacked upper clamp 430, the stacked lower clamp 450, and the plurality of stacked intermediate clamps 440.

According to exemplary embodiments of the present invention, cables including a multi-joint supporting member and stacked cables including the multi-joint supporting member bends a supporting member inserted into a pod to take straight posture or bending posture to guide and support an electric wire inserted into an electric wire insertion portion and an air hose inserted into an air insertion portion to take the straight or bending posture.

Further, various types of electric wires, air horses, and multi-purpose supporting members to which a purpose of a place where the cable is installed and needs of a user can be reflected are inserted into the pod and used to increase multi-purpose use efficiency of the cable.

In addition, upper sides and lower sides of the electric wire and the air hose are pressed by an elastic pad to prevent the electric wire and the air hose from being damaged and prevent the electric wire and the air hose from being twisted.

Moreover, the clamps are stacked and used to use a plurality of electric wires and a plurality of supporting members in one cable

### BRIEF DESCRIPTION OF THE DRAWINGS

FIG. 1 is a perspective view of cables including a multi-joint supporting member according to a first exemplary embodiment of the present invention (not claimed).
FIGS. 2 and 3 are exploded perspective views of the cables including a multi-joint supporting member according to the first exemplary embodiment of the present invention. (not claimed).
FIG. 4 is a cross-sectional view of a clamp according to the first exemplary embodiment of the present invention. (not claimed).
FIG. 5 is an exploded perspective view of the multi-joint supporting member of the present invention.
FIG. 6 is a perspective view of cables including a multi-joint supporting member according to the present invention.
FIG. 7 is a cross-sectional view of a clamp according to the present invention.
FIG. 8 is an operational state diagram of a fixation member and a fixation bar of the present invention.
FIG. 9 is a perspective view of stacked cables including the multi-joint supporting member to which the first and second exemplary embodiments of the present invention are applied.
FIG. 10 is a perspective view of stacked cables including a multi-joint supporting member according to a third exemplary embodiment of the present invention. (not claimed).
FIGS. 11A and 11B are exploded perspective views of the stacked cables including a multi-joint supporting member according to the third exemplary embodiment of the present invention. (not claimed).
FIG. 12 is a cross-sectional view of a clamp according to the third exemplary embodiment of the present invention. (not claimed).
FIG. 13 is a perspective view of stacked cables including a multi-joint supporting member according to a fourth exemplary embodiment of the present invention (not claimed).
FIG. 14 is an exemplary diagram illustrating a plurality of supporting member insertion portions and electric wire insertion portions formed on a pod according to the first and second exemplary embodiments of the present invention. (not claimed).
FIG. 15 is an exemplary diagram illustrating a plurality of pipe type insertions formed on the pod according to the third and fourth exemplary embodiments of the present invention. (not claimed).

### DETAILED DESCRIPTION

Hereinafter, exemplary embodiments of the present invention will be described in detail with reference to the accompanying drawings.

### <First Exemplary Embodiment> (not claimed)

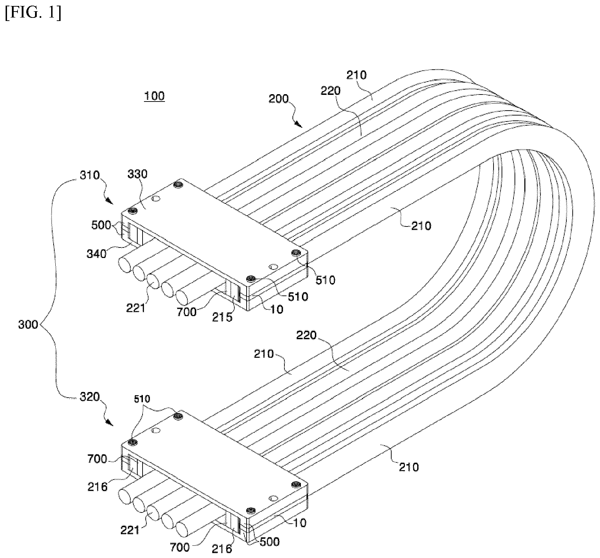

As illustrated in FIGS. 1, 2, and 14, cables including a multi-joint supporting member according to the present invention, include: a pod 200 configured to include a plurality of supporting member inserting portions 210 formed on the pod 200 and a plurality of electric wire insertion portions 220 formed on the pod 200; a plurality of multi-joint supporting members 211 inserted into the supporting member inserting portions 210 of the pod 200; a plurality of electric wire 221 inserted into the electric wire inserting portions 220 of the pod 200; and a clamp 300 configured to include a first clamp 310 accommodating one end of the multi-joint supporting member 211 and fixing and joining one end of the electric wire 221 so as to prevent the one end of the electric wire 221 from moving horizontally and a second clamp 320 accommodating the other end of the multi-joint supporting member 211 and fixing and joining the other end of the electric wire 221 so as to prevent the other end of the electric wire from moving horizontally.

The pod 200 is configured to include the plurality of supporting member inserting portions 210 and the plurality of electric wire inserting portions 220.

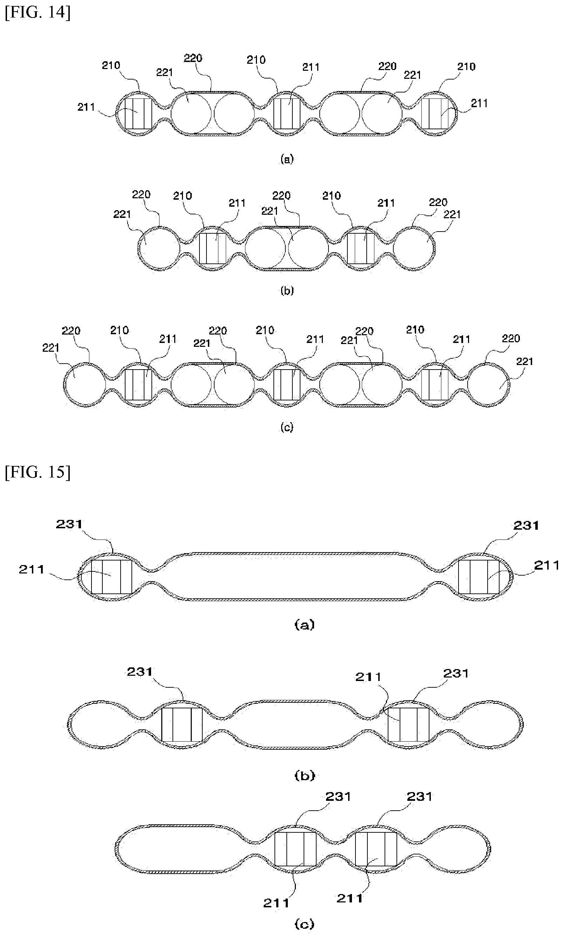

As illustrated in FIGS. 14A, 14B, and 14C, in the present invention, forming positions of the plurality of supporting member inserting portions 210 and the plurality of electric wire inserting portions 220 formed on the pod 200 may be variously modified as necessary.

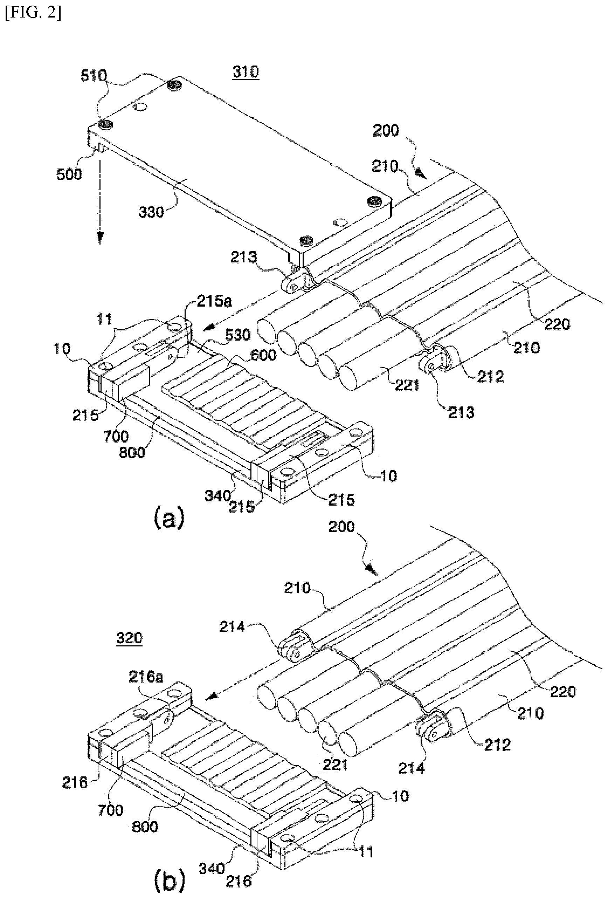

In FIG. 2, it is illustrated that the plurality of supporting member inserting portions 210 are formed at both side ends of the pod 200 as an example. However, in the present invention, the forming positions of the plurality of supporting member inserting portions 210 on the pod may be variously modified.

Further, although not illustrated, the forming positions of the plurality of electric wire inserting portions 220 on the pod may also be variously modified in the present invention.

The plurality of supporting member inserting portions 210 are formed on the pod 200 and since the supporting member generally has a shape of a long pipe, the supporting member inserting portion 210 has an elongated empty space therein. The plurality of supporting member inserting portions 210 are formed on the pod 200 and the multi-joint supporting member 211 is inserted into the supporting member inserting portion 210.

The plurality of electric wire inserting portions 220 are also formed on the pod 200 and have the elongated empty space therein, and as a result, multiple electric wires 221 are inserted into the electric wire inserting portions 220.

In FIGS. 1 to 5 illustrating the first exemplary embodiment, (not claimed), described is that the supporting member inserting portions 210 are disposed at both side ends of the pod 200 and the electric wire inserting portion 200 is disposed at the center of the pod 200, but in the present invention, it should be seen that the forming positions of the plurality of supporting member inserting portions 210 and the plurality of electric wire inserting portions 220 may be variously modified on the pod 200 as described.

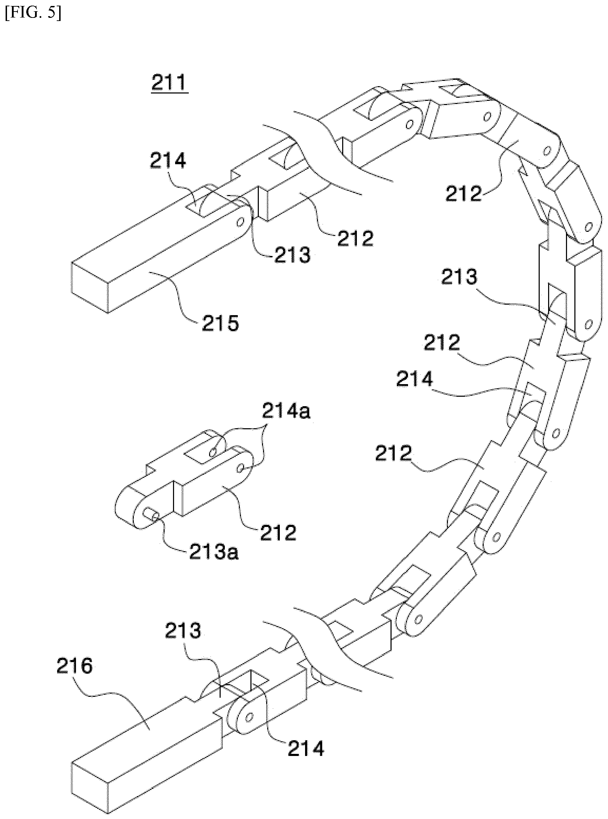

The multi-joint supporting member 211 is inserted into the supporting member inserting portion 210 of the pod 200. The multi-joint supporting member 211 is constituted by multiple unit joints 212 as illustrated in FIG. 5.

The unit joint 212 which is inserted into the supporting member inserting portion 210 of the pod 200 and multiple unit joints 212 are connected to each other in line and each connection point is configured to pivot at a predetermined angle to form a softly rounded shape when external force is applied.

In more detail, as illustrated in FIG. 5, the unit joint 212 is constituted by a front protrusion portion 213 and a rear end engagement unit 214, an engagement projection 213a is formed at the front protrusion portion 213 and an engagement groove 214a is formed at the rear engagement portion 214.

Therefore, when the unit joints 212 are connected to each other in line, the engagement projection 213a of the unit joint 212 positioned at a rear side engages in the engagement groove 214A of the unit joint 212 positioned at a front side. Therefore, the respective unit joints 212 pivot each other around the engagement protrusion 213a.

In addition, the unit joints positioned at one end and the other end of the multi-joint supporting member 211 are connected to first and second supporting member connecting means 215 and 216 configured in the clamp to be described below.

Meanwhile, the unit joint 212 and the unit joint 212 may be connected even by a pin joining scheme. That is, instead of the engagement protrusion 213a of the unit joint 212, a hole is formed at the front protrusion portion 213 and a pin is engaged and fitted into the hole and the engagement groove 214a of the rear engagement portion 214 to connect the unit joints to each other.

Multiple electric wires 221 are inserted into the electric wire inserting portions 220 of the pod 200. A fore portion of the electric wire 221 is exposed to the outside of the electric wire inserting portion 220 to be positioned between upper and lower clamps 330 and 340. Further, an air hose 222 may be additionally inserted into the electric wire inserting portion 220 in addition to the electric wire 221.

The clamp 300 which is used for accommodating one end or the other end of the multi-joint supporting member 211 inserted into the pod 200 and fixing the electric wire 221 inserted into the pod 200 so as to prevent the electric wire 221 from moving horizontally is constituted by the first clamp 310 and the second clamp 320 and the first clamp 310 and the second clamp 320 are configured to include the upper clamp 330 and the lower clamp 340, respectively.

That is, the first clamp 310 accommodates one end of the multi-joint supporting member 211 and the second clamp 320 accommodates the other end of the multi-joint supporting member 211.

The first supporting member connecting means 215 for accommodating one end of the multi-joint supporting member 211 is formed in the first clamp 310 and the second supporting member connecting means 216 for accommodating the other end of the multi-joint supporting member 211 is formed in the second clamp 320.

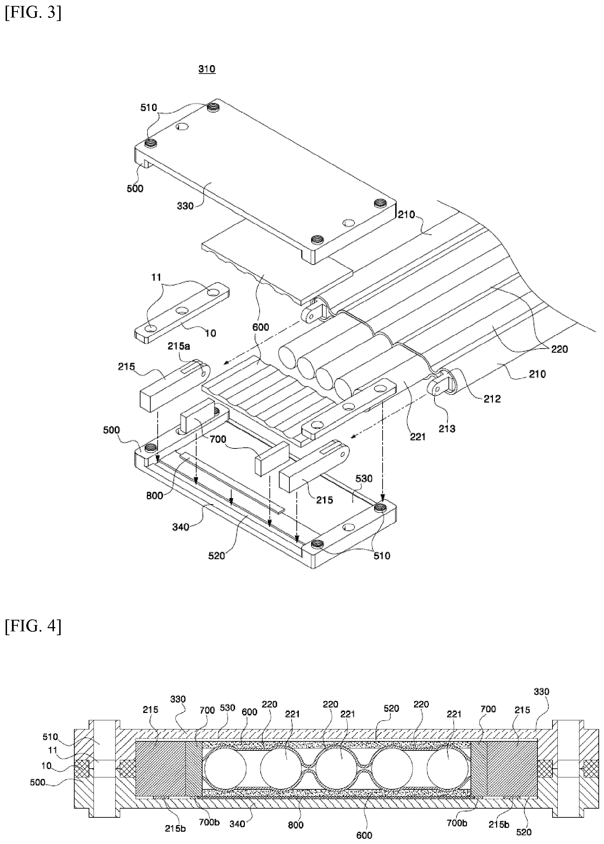

As illustrated in FIGS. 2A and 3, the first clamp 310 includes the upper clamp 330 including clamp ends 500 formed at both ends of the upper clamp 330 and joining holes 510 penetrating the clamp ends 500, the lower clamp 340 including the clamp ends 500 formed at both ends of the lower clamp 340, the joining holes 510 penetrating the clamp ends 500, and a guide groove 520 formed in such a manner that the first supporting member connecting means 215 and a fixation member 700 slide, the first supporting member connecting means 215 connected with one end of the multi-joint supporting member 211 and slidably joined to the guide groove 520, and the fixation member 700 preventing the first supporting member connecting means 215 from slidably moving after the first supporting member connecting means 215 is position-fixed on the guide groove 520, and as illustrated in FIG. 2B, the second clamp 320 includes the upper clamp 330 including clamp ends 500 formed at both ends of the upper clamp 330 and joining holes 510 penetrating the clamp ends 500, the lower clamp 340 including the clamp ends 500 formed at both ends of the lower clamp 340, the joining holes 510 penetrating the clamp ends 500, and the guide groove 520 formed in such a manner that the second supporting member connecting means 213 and the fixation member 700 slide, the second supporting member connecting means 216 connected with one end of the multi-joint supporting member 211 and slidably joined to the guide groove 520, and the fixation member 700 preventing the second supporting member connecting means 216 from slidably moving after the second supporting member connecting means 216 is position-fixed on the guide groove 520.

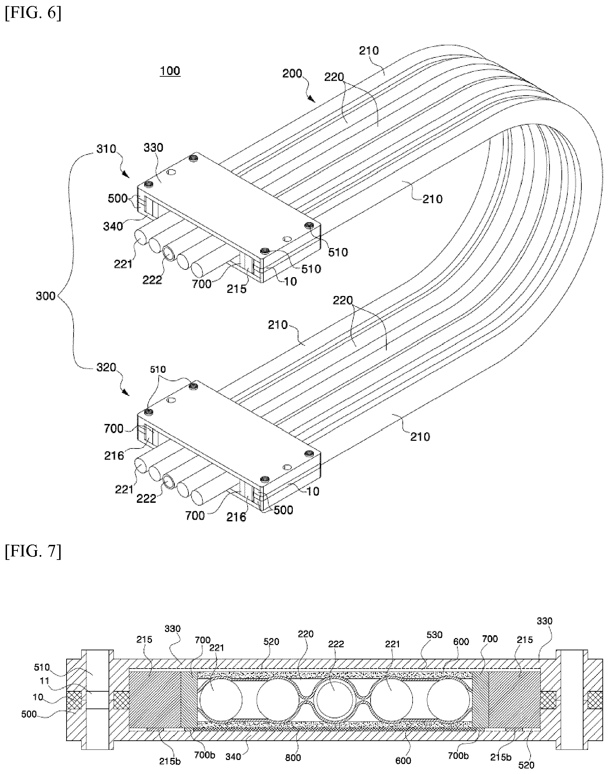

A fastening means penetrates the joining hole 510 and the upper and lower clamps 330 and 340 are joined to each other to fix the supporting members 211 and the electric wires 221 and as illustrated in FIGS. 4 and 7, conveying projections 215b, 216b, and 700b are formed on the first and second supporting member connecting means 215 and 216 and one surface of the fixation member 700 and the conveying projections 215b, 216b, and 700b are inserted into the guide groove 520, and as a result, the first and second supporting member connecting means 215 and 216 and the fixation member 700 are slidably joined to each other in the guide groove 520.

The clamp ends 500 are formed at both sides of the upper clamp 330 constituting the first clamp 310 and the joining hole 510 penetrates the clamp end 500 for joining with the lower clamp 340.

The clamp ends 500 are also formed at both sides of the lower clamp 340 constituting the first clamp 310 and the joining hole 510 is formed at the clamp end for joining with the upper clamp 330.

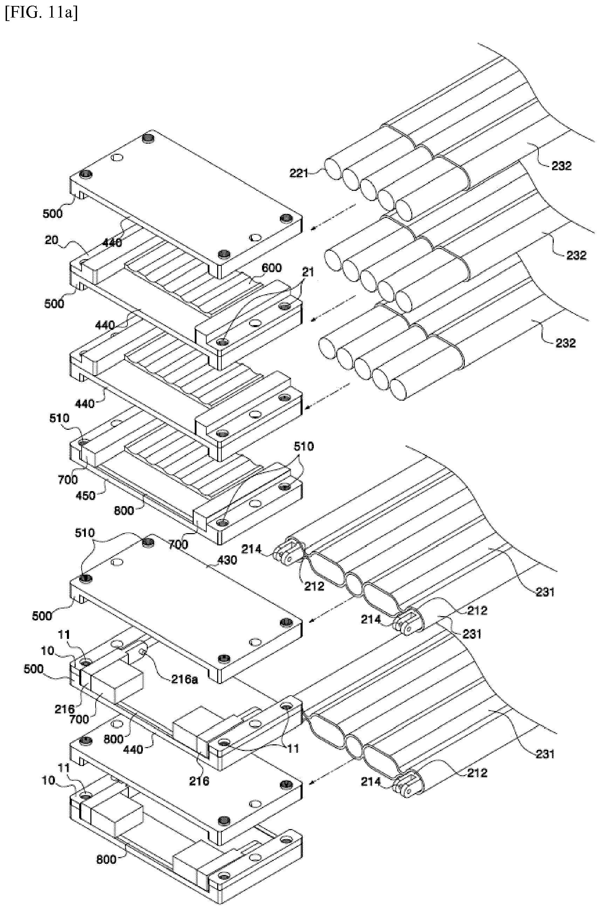

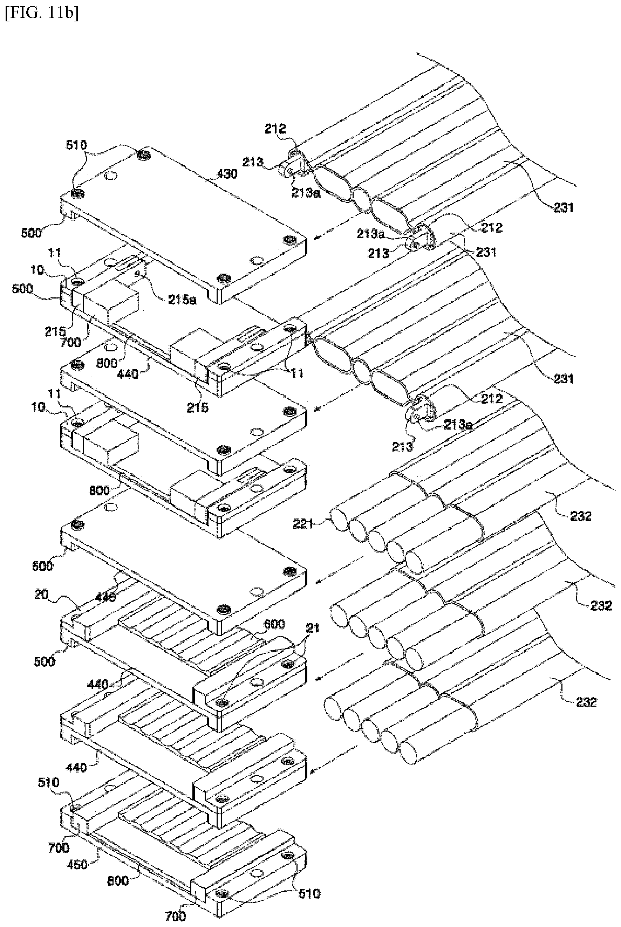

When the upper clamp 330 and the lower clamp 340 are joined with each other, the upper clamp 330 and the lower clamp 340 may be joined with each other by inserting a first connection member 10 or a second connection member 20 between the clamp ends 500 as illustrated in FIG. 3 or 11.

In this case, a joining hole is formed at a position corresponding to the joining hole 510 even in the first connection member 10 or the second connection member 20.

The upper clamp 330 and the lower clamp 340 are joined to each other by inserting the first connection member 10 or the second connection member 20 in order to control a joining height of the first clamp 310.

The first supporting member connecting means 215 and the fixation member 700 are formed in a space formed between the upper clamp 330 and the lower clamp 340 constituting the first clamp 310 as illustrated in FIG. 3 and the first supporting member connecting means 215 and the fixation member 700 are formed to be slidably joined to the guide groove 520 formed on an inner surface of the lower clamp 340.

The first supporting member connecting means 215 is connected with one end of the multi-joint supporting member 211 and slidably joined to the guide groove 520 and in the case of the sliding joining, the conveying projection 215b formed at one side of the first supporting member connecting means 215 is inserted into the guide groove 520, and as a result, the first supporting member connecting means 215 is joined to the guide groove 520.

Further, the fixation member 700 is used for preventing the first supporting member connecting means 215 from moving after the first supporting member connecting means 215 is slidably joined to the guide groove 520 and position-fixed, the fixation member 700 is also slidably joined to the guide groove 520, the conveying projection 700b is formed even at one side of the fixation member 700 for slidable joining and inserted and joined into the guide groove 520 to prevent the first supporting member connecting means 215 from moving.

The conveying projections 215b and 700b are formed to protrude on outer surfaces to the first and second supporting member connecting means 215 and 216 and the outer surface of the fixation member 700 with the same height as the length of the guide groove 520.

In this case, the width of the fixation member 700 may be variously modified and a width area may vary depending on states of the multi-joint supporting member and the electric wire fixed to the clamp.

A constitutive feature that prevents the first supporting member connecting means 215 from moving by using the fixation member 700 is described in detail.

As illustrated in FIG. 3, the first supporting member connecting means 215 and the electric wire 221 are positioned in an inner space formed when the upper and lower clamps 330 and 340 are joined to each other and the fixation member 700 is inserted, which has a width which is the same as the width of a part other than parts occupied by the first supporting member connecting means 215 and the electric wire 221 to prevent the first supporting member connecting means 215 from moving.

The clamp ends 500 are formed at both sides of clamp ends 500 are formed at both sides of the upper clamp 330 constituting the second clamp 320 and the joining hole 510 is formed to penetrate the upper clamp 330 constituting the second clamp 320 in the clamp end 500 for joining with the lower clamp 340.

The clamp ends 500 are also formed at both sides of clamp ends 500 are formed at both sides of the lower clamp 340 constituting the second clamp 320 and the joining hole 510 is formed in the clamp end 500 for joining with the upper clamp 330.

The upper clamp 330 and the lower clamp 340 constituting the second clamp 320 may be joined with each other by inserting the first connection member 10 or the second connection member 20 between the clamp ends 500 as illustrated in FIG. 3 or 11.

In this case, the joining hole is formed at the position corresponding to the joining hole 510 even in the first connection member 10 or the second connection member 20.

The upper clamp 330 and the lower clamp 340 are joined to each other by inserting the first connection member 10 or the second connection member 20 in order to control the joining height of the second clamp 320.

The second supporting member connecting means 216 and the fixation member 700 are formed between the upper clamp 330 and the lower clamp 340 constituted in the second clamp 320 and the second supporting member connecting means 216 and the fixation member 700 are formed to be slidably joined to the guide groove 520 formed on the inner surface of the lower clamp 340.

The second supporting member connecting means 216 is connected with the other end of the multi-joint supporting member 211 and slidably joined to the guide groove 520 and in the case of the sliding joining to the guide groove 520, the conveying projection 216b formed at one side of the second supporting member connecting means 216 is inserted into the guide groove 520, and as a result, the second supporting member connecting means 216 is joined to the guide groove 520.

Further, the fixation member 700 is used for preventing the second supporting member connecting means 216 from moving after the second supporting member connecting means 216 is slidably joined to the guide groove 520 and position-fixed, the fixation member 700 is also slidably joined to the guide groove 520, the conveying projection 700b is formed even at one side of the fixation member 700 for slidable joining and inserted and joined into the guide groove 520 to prevent the second supporting member connecting means 216 from moving.

In this case, the width of the fixation member 700 may be variously modified and the width area may vary depending on the states of the multi-joint supporting member and the electric wire fixed to the clamp.

The constitutive feature that prevents the second supporting member connecting means 216 from moving by using the fixation member 700 is described similarly as in the first supporting member connecting means 215.

As illustrated in FIGS. 2, 3, and 8, the first and second clamps 310 and 320 further include one or more fixation bars 800 inserted into the guide groove 520 in order to prevent the first and second supporting member connecting means 215 and 216 from moving after the first and second supporting member connecting means 215 and 216 and the fixation member 700 are position-fixed on the guide groove 520.

The fixation bar 800 prevents the fixation member 700 and the first and second supporting member connecting means 215 and 216 inserted into the guide groove 520 at a lower end of a part where the electric wire 221 is positioned and formed at both sides of the electric wire 221 from moving.

The thickness of the fixation bar 800 is formed with the same thickness as the depth of the guide groove 520 to prevent interference in the electric wire 221.

As illustrated in FIG. 3, a pad groove 530 formed so as to position an elastic pad 600 and the elastic pad 600 inserted into the pad groove 530 are further formed on at least one of the inner surfaces of the upper and lower clamps 330 and 340.

The elastic pad 600 is formed to press and fix the supporting member 211 and the electric wire 221 formed between the upper clamp 330 and the lower clamp 340 and one surface (a surface contacting the supporting member 211 or the electric wire 221) of the elastic pad 600 has a curved shape or a flat shape without a curve.

The pad groove 530 is formed with a predetermined depth on at least one of the inner surfaces of the upper clamp 330 and the lower clamp 340 and the elastic pad 600 is attached to and accommodated in the pad groove 530 with the predetermined depth.

As illustrated in FIG. 3, in the first and second clamps 310 and 320, the first connection member 10 having a "1" shape is formed between the upper clamp 330 and the lower clamp 340 in order to control the joining height between the upper clamp 330 and the lower clamp 340.

Further, as illustrated in FIGS. 11A and 11B, the second connection member 20 having a " 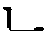 ' shape may be formed instead of the first connection member 10 having the "1" shape.

The joining hole is formed at the position corresponding to the joining hole 510 formed at the clamp end 500 in the first and second connection members 10 and 20 and the fastening means penetrates the joining hole 510 formed at the end of the clamp end 500 and the joining holes formed in the first and second connection members 10 and 20 to join the first connection member 10 or the second connection member 20 to the upper and lower clamps 330 and 340.

The first connection member 10 has the "1" shape and has a plurality of joining holes and the second connection member 20 has the " 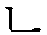 " shape and has the plurality of joining holes.

The "1" shaped first connection member 10 has the same shape as the clamp ends 500 of the upper and lower clamps 330 and 340 to be joined to the clamp end 500, one end of the second connection member 20 having the " 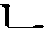 " shape is formed to be joined to the clamp end 500, and the other side of the second connection member 20 is formed to serve as the fixation member 700 in a space formed when the upper clamp 330 and the lower clamp 340 are joined to each other.

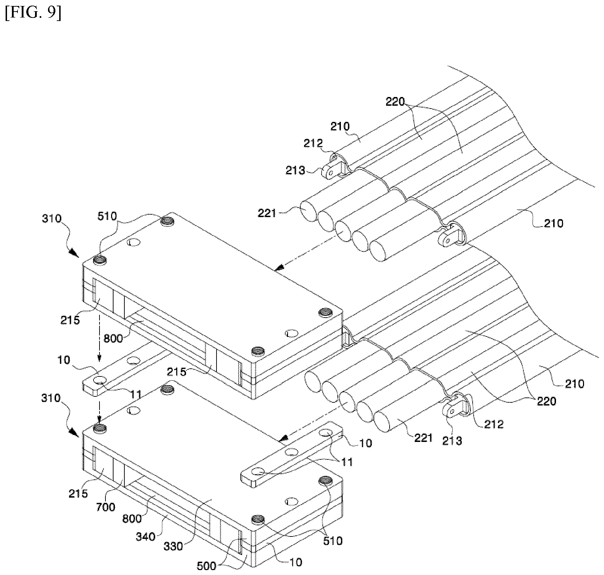

As illustrated in FIG. 9, the cables including the multi-joint supporting member according to the invention are stacked in a multi-stacking structure to form stacked cables.

That is, a plurality of pods 200 are stacked and a plurality of first clamps 310 are stacked to constitute the stacked cables. In this case, the first clamps 310 configured in respective layers are joined by the joining means.

Of course, although not illustrated in FIG. 9, it will be apparent that a plurality of second clamps 320 are also stacked and joined to each other by the joining means.

### <Second Exemplary Embodiment> (claimed)

FIGS. 6 and 7 illustrate a second exemplary embodiment of the present invention and in the second exemplary embodiment, the air hose 222 are additionally inserted into the electric wire inserting portion 220 of the first exemplary embodiment in addition to the electric wire 221 and other constitutive features are similar to those of the first exemplary embodiment in addition to insertion of the air hose.

Cables including a multi-joint supporting member according to the second exemplary embodiment of the present invention, include: a pod 200 configured to include a plurality of supporting member inserting portions 210 formed on the pod 200 and a plurality of electric wire insertion portions 220 formed on the pod 200; a plurality of multi-joint supporting members 211 inserted into the supporting member inserting portions 210 of the pod 200; a plurality of electric wire 221 inserted into the electric wire inserting portions 220 of the pod 200; one or more air hoses 222 inserted into the electric wire inserting portions 220 of the pod 200; and a clamp 300 configured to include a first clamp 310 accommodating one end of the multi-joint supporting member 211 and fixing and joining one end of the electric wire 221 so as to prevent the one end of each of the electric wire 221 and the air hose 222 from moving horizontally and a second clamp 320 accommodating the other end of the multi-joint supporting member 211 and fixing and joining the other ends of the electric wire 221 and the air hose 222 so as to prevent the other end of the electric wire from moving horizontally.

As described above, the claimed exemplary embodiment of the present invention is the invention in which the air hose 222 is additionally inserted into the electric wire inserting portion 220 of the first exemplary embodiment in addition to the electric wire 221. Therefore, since the constitutive feature other than the air hose 222 is the same as that of the first exemplary embodiment, (not claimed), a detailed description thereof will be omitted.

### <Third Exemplary Embodiment> (not claimed)

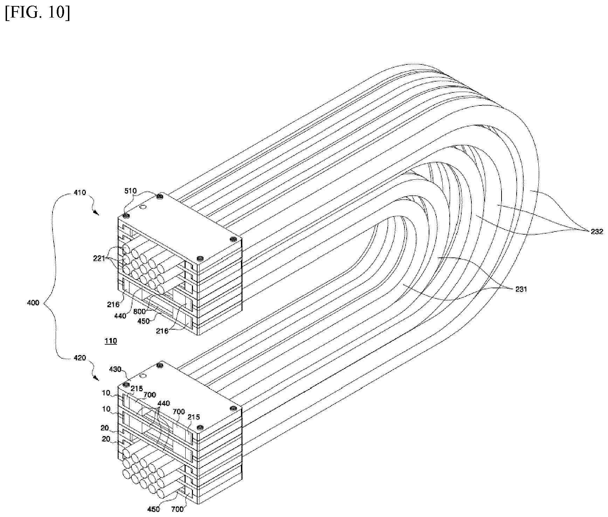

FIGS. 10 to 12 illustrate a third exemplary embodiment (not claimed) and a stacked cable including a multi-joint supporting member according to the third exemplary embodiment (not claimed) of the present invention, includes: a stacked pod 230 including one or more first pods 231 having a plurality of supporting member inserting portions 210 and one or more second pods 232 positioned above the first pods 231 and having a plurality of electric wire inserting portions 220; a plurality of multi-joint supporting members 211 inserted into the supporting member inserting portions 210; a plurality of electric wires 221 inserted into the electric wire inserting portions 220; and a stacked clamp 400 configured to include a first stacked clamp 410 configured to include a stacked upper clamp 430 and a stacked lower clamp 450, and a plurality of stacked intermediate clamps 440 and a second stacked clamp 420 configured to include a first stacked clamp 410 configured to include the stacked upper clamp 430 and the stacked lower clamp 450, and the plurality of stacked intermediate clamps 440, the plurality of stacked intermediate clamps 440 are positioned between the stacked upper clamp 430 and the stacked lower clamp 450, the stacked lower clamp 450 and one or more stacked intermediate clamps 440 constituting the first stacked clamp 410 are joined to accommodate one end of each of the plurality of multi-joint supporting members 211 inserted into the supporting member inserting portions 210 of the first pods 231, the stacked lower clamp 430 and one or more stacked intermediate clamps 440 constituting the second stacked clamp 420 are joined to accommodate one other ends of the plurality of multi-joint supporting members 211 inserted into the supporting member inserting portions 210 of the first pods 231, and the stacked lower clamp 430 and one or more stacked intermediate clamps 440 constituting the first stacked clamp 410 and the stacked lower clamp 450 and one or more stacked intermediate clamps 440 constituting the second stacked clamp 420 are joined to each other in order to fix the end of the electric wire 221 inserted into the electric inserting portion 22 of the second pod 232.

FIGS. 10 to 12 illustrating the third exemplary embodiment (not claimed) illustrate a total of 5-stage (a 2-stage type first pod and a 2-stage type second pod) type stacked table, but a form of the number of stacked stages which may be constituted by the stacked cables may be variously modified in the present invention.

For example, the form of the number of stacked stages may be constituted even by a total of 6-stage type stacked cable constituted by a 3-stage type first pod and a 3-stage type second pod or configured even by the 2-stage first pod and a 4-stage second pod.

As illustrated in FIGS. 10, 11A, and 11B, the stacked pod 230 is formed to include the first pod 231 and the second pod 232, the first pods 231 are one or more pods having the plurality of supporting member inserting portions 210, and the multi-joint supporting members 211 are inserted into the plurality of supporting member inserting portions 210 of the first pods 231.

The second pods 232 are one o more pods having the plurality of electric wire inserting portions 220 and the electric wires 221 are inserted into the plurality of electric wire inserting portions 220.

Further, the second pods 232 are positioned above the first pods 231.

That is, the plurality of supporting member inserting portions 210 are formed in one or more first pods 231, respectively and the plurality of electric wire inserting portions 210 are formed in one or more second pods 232, respectively.

As illustrated in FIG. 15, in the present invention, the forming positions of the plurality of supporting member inserting portions 210 having the first pods 231 may be variously modified as necessary.

In FIGS. 11A and 11B, it is illustrated that the plurality of supporting member inserting portions 210 are formed at both side ends of the first pod 231 as an example. However, in the present invention, the forming positions of the plurality of supporting member inserting portions 210 on the first pod 231 may be variously modified as illustrated in FIG. 15.

Further, although not illustrated, the forming positions of the plurality of electric wire inserting portions 220 on the second pods 232 may also be variously modified in the present invention.

The stacked clamp 400 includes the first stacked clamp 410 and the second stacked clamp 420.

Each of the first stacked clamp 410 and the second stacked clamp 420 is configured to include a stacked upper clamp 430 and a stacked lower clamp 450, and a plurality of stacked intermediate clamps 440 formed between the stacked upper and lower clamps 430 and 440.

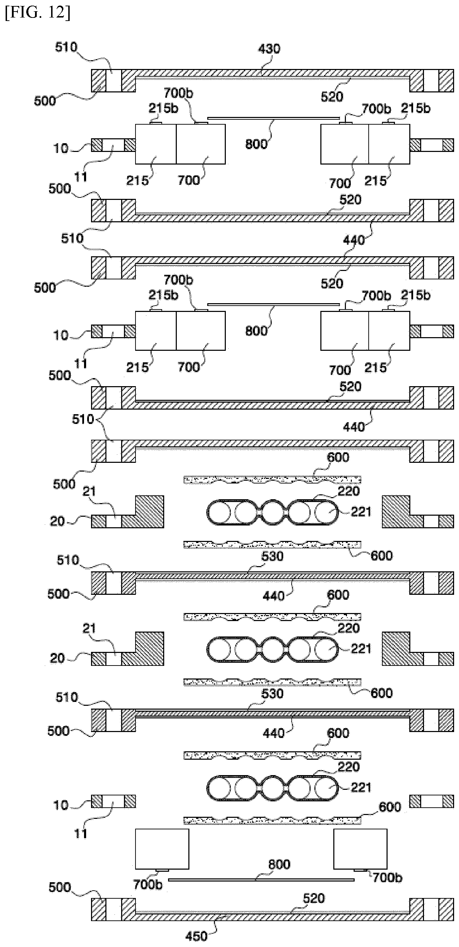

In detail, as illustrated in FIGS. 11A and 12, the first stacked clamp 410 includes the stacked upper clamp 430, the stacked lower clamp 450, the plurality of stacked intermediate clamps 440 formed between the stacked upper and lower clamps 430 and 440, the clamp ends 500 formed in the stacked upper and lower clamps 430 and 440 and both side ends of the intermediate clamp 440, the joining hole 510 penetrating the clamp end 500, the guide grooves 520 formed on the inner surfaces of the stacked upper clamp 430 and the stacked lower clamp 450, and the plurality of stacked intermediate clamp 440, the plurality of first supporting member connecting means 215 connected with one end of the multi-joint supporting member 211 and slidably joined to the guide grooves 520, and the plurality of fixation members 700 preventing the first supporting member connecting means 215 from slidably moving after the first supporting member connecting means 215 is position-fixed on the guide groove 520.

In detail, as illustrated in FIG. 11B, the second stacked clamp 420 includes the stacked upper clamp 430, the stacked lower clamp 450, the plurality of stacked intermediate clamps 440 formed between the stacked upper and lower clamps 430 and 440, the clamp ends 500 formed in the stacked upper clamp 430 and the stacked lower clamp 450, and both ends of the plurality of stacked intermediate clamp 440, the joining hole 510 penetrating the clamp end 500, the guide grooves 520 formed on the inner surfaces of the stacked upper clamp 430 and the stacked lower clamp 450, and the plurality of stacked intermediate clamp 440, the plurality of second supporting member connecting means 216 connected with the other end of the supporting member 211 and slidably joined to the guide grooves 520, and the plurality of fixation members 700 preventing the second supporting member connecting means 216 from slidably moving after the second supporting member connecting means 215 is position-fixed on the guide groove 520.

Further, the fastening means penetrates the joining hole 510 and the stacked upper clamp 430 and the stacked lower clamp 450, and the plurality of stacked intermediate clamps 440 are thus joined to each other to fix the multi-joint supporting member 211 and the electric wire 221.

The conveying projections 215b, 216b, and 700b are formed in the first and second supporting member connecting means 215 and 216 and one surface of the fixation member 700 as illustrated in FIG. 12 and the conveying projections are inserted into the guide grooves 520, and as a result, the first and second supporting member connecting means 215 and 216 and the fixation member 700 are slidably joined to the guide grooves 520.

The clamp ends 500 are formed in the stacked upper clamp 430 and the stacked lower clamp 450, and the plurality of intermediate clamps 440 constituting the first and second stacked clamps 410 and 420 as illustrated in FIGS. 11A, 11B, and 12 and the joining holes 510 penetrate the clamp ends 500 for joining with other clamps.

Further, when the stacked upper clamp 450 and the intermediate clamp 440 are joined to each other, the stacked lower clamp 450 and the intermediate clamp 440 are joined to each other, and the intermediate clamps 440 are joined to each other, the stacked upper clamp 450 and the intermediate clamp 440 may be joined to each other, the stacked lower clamp 450 and the intermediate clamp 440 may be joined to each other, and the intermediate clamps 440 may be joined to each other by inserting the first connection member 10 or the second connection member 20 between the clamp ends 500 as illustrated in FIGS. 11A, 11B, and 12.

That is, the stacked upper clamp 430 and the intermediate clamp 440 may be joined to each other, the stacked lower clamp 450 and the intermediate clamp 440 may be joined to each other, and the intermediate clamps 440 may be joined to each other without inserting the first connection member 10 or the second connection member 20 or by inserting the first connection member 10 or the second connection member 20.

In this case, the joining hole may be formed at the position corresponding to the joining hole 510 even in the first connection member 10 or the second connection member 20.

The stacked upper clamp 430 and the intermediate clamp 440 are joined to each other, the stacked lower clamp 450 and the intermediate clamp 440 are joined to each other, and the intermediate clamps 440 are joined to each other by inserting the first connection member 10 or the second connection member 20 in order to control the joining heights of the first and second stacked clamps 410 and 420 so as to sufficiently accommodate the supporting members or the electric wires inserted and accommodated into the first and second stacked clamps 410 and 420.

In this case, as illustrated in FIG. 12, the first connection member 10 or the second connection member 20 formed to control the joining heights of the first and second stacked clamps 410 and 420 may be the first connection member 10 having the "1" shape or the second connection member 20 having the " 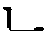 " shape.

In more detail, the joining hole is formed at the position corresponding to the joining hole 510 formed at the clamp end 500 in the first and second connection members 10 and 20 and the fastening means penetrates the joining hole 510 formed at the clamp end 500 and the joining holes formed in the first and second connection members 10 and 20 to join the first connection member 10 or the second connection member 20 to the upper and lower clamps 330 and 340 and the plurality of stacked intermediate clamps 440.

The first connection member 10 has the "1" shape and has a plurality of joining holes and the second connection member 20 has the " 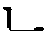 " shape and has the plurality of joining holes.

The "1" shaped first connection member 10 has the same shape as the clamp ends 500, one side of the second connection member 20 having the " 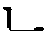 " shape is formed to be joined to the clamp end 500, and the other side of the second connection member 20 is formed to serve as the fixation member 700 in an inner space formed when the clamps are joined to each other.

In illustrating a stacking structure of the second stacked clamp 420 using the first connection member 10 and the second connection member 20, the stacked lower clamp 450, the first connection member 10, the stacked intermediate clamp 440, the second connection member 20, the stacked intermediate clamp 440, the second connection member 20, the stacked intermediate clamp 440, the stacked intermediate clamp 440, the first connection member 10, the stacked intermediate clamp 440, the stacked intermediate clamp 440, the first connection member 10, the first connection member 10, the stacked intermediate clamp 440, the first connection member 10, the stacked intermediate clamp 440, the first connection member 10, and the stacked upper clamp 430 are sequentially joined to each other from the bottom to form the first and second stacked clamps 410 and 420 and the stacking structures of the first and second stacked clamp 410 and 420 may be variously modified in addition to the illustration.

The guide grooves 520 are formed on the inner surfaces of the stacked upper clamp 430 and the stacked lower clamp 450, and the stacked intermediate clamps 440 constituting the first and second stacked clamps 410 and 420 and the conveying projections 215b, 216b, and 700b formed in the first and second supporting member connecting means 215 and 216 and the fixation member 700 are inserted into the guide grooves 520, and as a result, the first and second supporting member connecting means 215 and 216 and the fixation member 700 are slidably joined to the guide grooves 520.

The first supporting member connecting means 215 and the fixation member 700 are positioned in the inner space formed by the stacked lower clamp 450 and one or more stacked intermediate clamps 440 constituting the first stacked clamp 410 and the first supporting member connecting means 215 and the fixation member 700 are formed to be slidably joined to the guide grooves 520.

Further, the first supporting member connecting means 216 and the fixation member 700 are positioned even in the inner space formed by the stacked upper clamp 430 and one or more stacked intermediate clamps 440 constituting the second stacked clamp 420 and the second supporting member connecting means 216 and the fixation member 700 are formed to be slidably joined to the guide grooves 520.

The first supporting member connecting means 215 is positioned at the first stacked clamp 410 and connected with one end of the multi-joint supporting member 211.

The second supporting member connecting means 216 is positioned at the second stacked clamp 420 and connected with the other end of the multi-joint supporting member 211.

Further, the electric wires are inserted and disposed in spaces formed between the stacked upper clamp 430 and one or more stacked intermediate clamps 440 constituting the first stacked clamp 410 and between the stacked lower clamp 450 and one or more stacked intermediate clamps 440 constituting the second stacked clamp 420.

In this case, the fixation member 700 may be formed in the space together with the electric wire. In this case, the fixation member 700 is also formed to be slidably joined to the guide groove 520 formed on the inner surface of the clamp.

The fixation member 700 is used for preventing the first and second supporting member connecting means 215 and 216 from moving after the first and second supporting member connecting means 215 and 216 are slidably joined to the guide grooves 520 and position-fixed, the fixation member 700 is also slidably joined to the guide groove 520, the conveying projection 700b is formed at one side of the fixation member 700 for slidable joining and inserted and joined into the guide groove 520 to prevent the first and second supporting member connecting means 215 and 216 from moving.

The conveying projections 215b, 216b, and 700b formed to protrude in the first and second supporting member connecting means 215 and 216 and the fixation member 700 are formed to protrude on the outer surfaces of the first and second supporting member connecting means 215 and 216 and the outer surface of the fixation member 700 with the same height as the depth of the guide groove 520.

The constitutive feature that prevents the first supporting member connecting means 215,216 from moving by using the fixation member 700 is described below.

The plurality of first supporting member connecting means 215 is formed in the inner space formed when the stacked lower clamp 450 and one or more stacked intermediate clamps 440 constituting the first stacked clamp 410 are joined to each other and the plurality of second supporting member connecting means 216 is formed in the inner space formed when the stacked upper clamp 430 and one or more stacked intermediate clamps 440 constituting the second stacked clamp 420 are joined to each other.

The plurality of fixation members 700 are inserted into an inner space part other than the part occupied by the plurality of first supporting member connecting means 215 or the plurality of second supporting member connecting means 216 in the inner space to prevent the first and second supporting member connecting means 215 and 216 from moving.

Further, the fixation bar 800 may be used by combinationally using the fixation member 700 in order to restrict movement of the first and second supporting member connecting means 215 and 216.

In this case, the fixation member 700 is slidably joined to the guide groove 520 by using the conveying projection 700b and the fixation bar 800 is engaged and inserted into the guide groove 520 with a predetermined length.

The constitutive feature that prevents the electric wire 221 from moving by using the fixation member 700 is described below.

A plurality of electric wires are inserted and accommodated in the inner space formed when the stacked upper clamp 430 and one or more stacked intermediate clamps 440 constituting the first stacked clamp 410 are joined to each other and the inner space formed when the stacked lower clamp 450 and one or more stacked intermediate clamps 440 constituting the second stacked clamp 420.

The fixation member 700 is formed between the plurality of electric wires or in a part other than the space occupied by the electric wire to restrict movement of the electric wire.

In this case, the fixation member 700 is slidably joined to the guide groove 520 by using the conveying projection 700b and the fixation bar 800 is engaged and inserted into the guide groove 520 with a predetermined length.

The first and second stacked clamps 410 and 420 further include one or more fixation bars 800 inserted into the guide grooves 520 in order to prevent the first and second supporting member connecting means 215 and 216 and the fixation member 700 from moving after the first and second supporting member connecting means 215 and 216 and the fixation member 700 are position-fixed on the guide grooves 520.

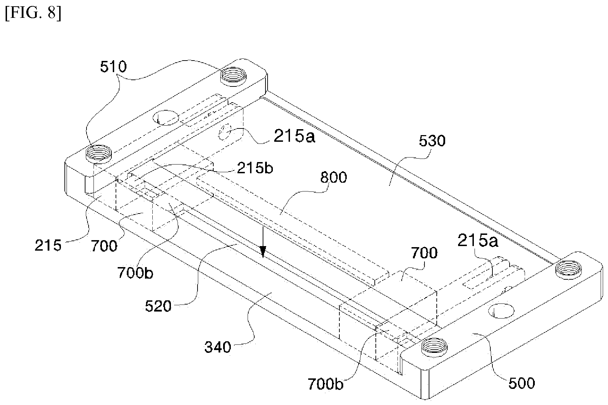

Referring to FIG. 8, the fixation bars 800 are inserted into the guide grooves 520 at which the first and second supporting member connecting means 215 and 216 and the fixation member 700 are not positioned to restrict the movement of the first and second supporting member connecting means 215 and 216 and the fixation member 700.

Further, the fixation bars 800 may be used in order to restrict the movement of the electric wires.

The plurality of electric wires are inserted and accommodated in the inner space formed when the stacked upper clamp 430 and one or more stacked intermediate clamps 440 constituting the first stacked clamp 410 are joined to each other and the inner space formed when the stacked lower clamp 450 and one or more stacked intermediate clamps 440 constituting the second stacked clamp 420.

In this case, the fixation bar 800 is inserted into the guide groove 520 positioned below the part where the electric wire is positioned. Therefore, the movement of the fixation member 700 is more strictly restricted by the fixation bar 800, and as a result, the movement of the electric wires may be certainly restricted.

The thickness of the fixation bar 800 is formed with the same thickness as a predetermined depth of the guide groove 520 to prevent interference in the electric wire 221.

As illustrated in FIG. 11A, the pad groove 530 that allows the elastic pad 600 to be positioned and the elastic pad 600 inserted into the pad groove 530 may be formed on at least one surface of the inner surface of the stacked upper clamp 430 and the inner and outer surfaces of the plurality of intermediate clamps 440 of the first stacked clamp 410 forming the space into which the electric wire is inserted.

Further, as illustrated in FIG. 11B, the pad groove 530 that allows the elastic pad 600 to be positioned and the elastic pad 600 inserted into the pad groove 530 may be formed on at least one surface of the inner surface of the stacked lower clamp 450 and the inner and outer surfaces of the plurality of intermediate clamps 440 of the second stacked clamp 420 forming the space into which the electric wire is inserted.

The elastic pad 600 is formed to increase fixation force by pressing the electric wire 221 inserted into the inner space when the clamps are joined to each other and one surface (a part contacting the electric wire) of the elastic pad 600 has a curved shape or is flat with no curve.

### <Fourth Exemplary Embodiment> (not claimed)

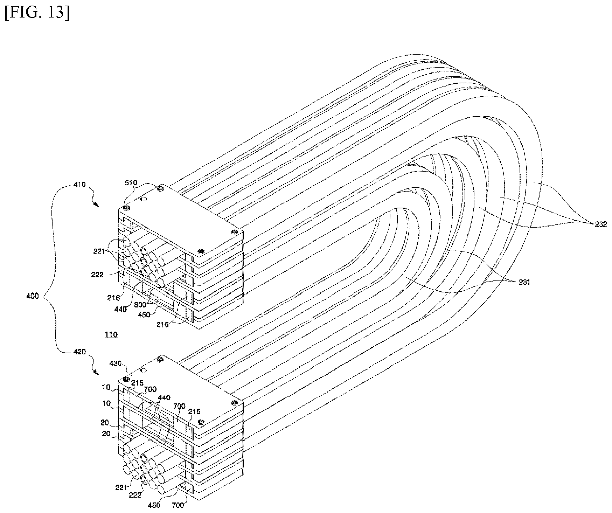

FIG. 13 illustrates a fourth exemplary embodiment (not claimed) of the present invention and in the fourth exemplary embodiment, the electric wires and the air hoses 222 are inserted into the plurality of electric wire inserting portion 220 of second pod 262 in the third exemplary embodiment (not claimed) and other constitutive features are similar to those of the third exemplary embodiment in addition to additional constitution of the air hose 222.

As illustrated in FIG. 13, stacked cables including a multi-joint supporting member according to the fourth exemplary embodiment of the present invention include: a stacked pod 230 including one or more first pods 231 having a plurality of supporting member inserting portions 210 and one or more second pods 232 positioned above the first pods 231 and having a plurality of electric wire inserting portions 220; a plurality of multi-joint supporting members 211 inserted into the supporting member inserting portions 210; a plurality of electric wires 221 inserted into the electric wire inserting portions 220; and a stacked clamp 400 configured to include a first stacked clamp 410 configured to include a stacked upper clamp 430 and a stacked lower clamp 450, and a plurality of stacked intermediate clamps 440 and a second stacked clamp 420 configured to include a first stacked clamp 410 configured to include the stacked upper clamp 430 and the stacked lower clamp 450, and the plurality of stacked intermediate clamps 440, the plurality of stacked intermediate clamps 440 are positioned between the stacked upper clamp 430 and the stacked lower clamp 450, the stacked lower clamp 450 and one or more stacked intermediate clamps 440 constituting the first stacked clamp 410 are joined to accommodate one end of each of the plurality of multi-joint supporting members 211 inserted into the supporting member inserting portions 210 of the first pods 231, the stacked lower clamp 430 and one or more stacked intermediate clamps 440 constituting the second stacked clamp 420 are joined to accommodate one other ends of the plurality of multi-joint supporting members 211 inserted into the supporting member inserting portions 210 of the first pods 231, and the stacked lower clamp 430 and one or more stacked intermediate clamps 440 constituting the first stacked clamp 410 and the stacked lower clamp 450 and one or more stacked intermediate clamps 440 constituting the second stacked clamp 420 are joined to each other in order to fix the ends of the electric wire 221 and the air hose 222 inserted into the electric inserting portion 22 of the second pod 232.

As described above, the fourth exemplary embodiment (not claimed) of the present invention is the invention in which the air hose 222 is additionally inserted into the plurality of electric wire inserting portions 220 of the third exemplary embodiment (not claimed) in addition to the electric wire 221. Therefore, since the constitutive feature other than the air hose 222 is the same as that of the third exemplary embodiment, (not claimed) a detailed description thereof will be omitted.

## Claims

1. Cables including a multi-joint supporting member, comprising:
a pod (200) configured to include a plurality of supporting member inserting portions (210) formed on the pod (200) and a plurality of electric wire insertion portions (220) formed on the pod (200);
a plurality of multi-joint supporting members (211) constituted by multiple unit joints (212), inserted into the supporting member inserting portions (210) of the pod (200);
a plurality of electric wire (221) inserted into the electric wire inserting portions (220) of the pod (200); and
a clamp (300) configured to include a first clamp (310) accommodating one end of the multi-joint supporting member (211) and fixing and joining one end of the electric wire (221) so as to prevent the one end of the electric wire (221) from moving horizontally and a second clamp (320) accommodating the other end of the multi-joint supporting member (211) and fixing and joining the other end of the electric wire (221) so as to prevent the other end of the electric wire from moving horizontally;
one or more air hoses (222) inserted into the electric wire inserting portions (220) of the pod (200); and
the clamp (300) configured to prevent the one end of the air hose (222) from moving horizontally and the second clamp (320) fixing and joining the air hose (222) so as to prevent the other end from moving horizontally; and
the unit joint (212) at one end of the multi-joint supporting member (211) is connected to the first clamp (310) and the unit joint (212) at the other end of the multi-joint supporting member (211) is connected to the second clamp (320),
wherein the first clamp (310) includes
an upper clamp (330) including clamp ends (500) formed at both ends of the upper clamp (330) and joining holes (510) penetrating the clamp ends (500),
a lower clamp (340) including the clamp ends (500) formed at both ends of the lower clamp (340) and joining holes (510) penetrating the clamp ends (500), the second clamp (320) includes an upper clamp (330) including clamp ends (500) formed at both ends of the upper clamp (330) and joining holes (510) penetrating the clamp ends (500), a lower clamp (340) including the clamp ends (500) formed at both ends of the lower clamp (340), the joining holes (510) penetrating the clamp ends, **characterized by:**
guide grooves (520) to which the first supporting member connecting means (215) and a fixation member (700) are slidably joined and connected to a lower side of the upper clamp (330),
the first supporting member connecting means (215) connected with one end of the multi-joint supporting member (211) and slidably joined to the guide groove (520), and
a fixation member (700) preventing the first supporting member connecting means (215) from slidably moving after the first supporting member connecting means (215) is position-fixed on the guide groove (520), and guide grooves (520) to which the second supporting member connecting means (216) and the fixation member (700) are slidably joined and connected to the lower side of the upper clamp (330),
a second supporting member connecting means (216) connected with the other end of the multi-joint supporting member (211) and slidably joined to the guide groove (520), and
a fixation member (700) preventing the second supporting member connecting means (216) from slidably moving after the second supporting member connecting means (216) is position-fixed on the guide groove (520), and
a fastening means penetrates the joining hole (510) and the upper and lower clamps (330) and (340) are joined to each other to fix the supporting members (211) and the electric wires (221) and conveying projections (215b, 216b, and 700b) are formed on the first and second supporting member connecting means (215) and (216) and one surface of the fixation member (700) and the conveying projections (215b, 216b, and 700b) are inserted into the guide groove (520), and as a result, the first and second supporting member connecting means (215 and 216) and the fixation member (700) are slidably joined to each other in the guide groove (520),
wherein the first and second clamps (310 and 320) further include one or more fixation bars (800) inserted into the guide groove (520) in order to prevent the first and second supporting member connecting means (215 and 216) from moving after the first and second supporting member connecting means (215 and 216) and the fixation member (700) are position-fixed on the guide groove (520).

2. The cables including a multi-joint supporting member of claim 1, wherein the unit joint (212) is constituted by a front protrusion portion (213) and a rear end engagement unit (214), an engagement projection (213a) is formed at the front protrusion portion (213) and an engagement groove (214a) is formed at the rear engagement portion (214).

3. The cables including a multi-joint supporting member of claim 1, wherein the first clamp (310) includes
the upper clamp (330) including clamp ends (500) formed at both ends of the upper clamp (330) and joining holes (510) penetrating the clamp ends (500),
the lower clamp (340) including the clamp ends (500) formed at both ends of the lower clamp (340), the joining holes (510) penetrating the clamp ends (500), and guide grooves (520) to which the first supporting member connecting means (215) and the fixation member (700) are slidably joined and connected to a lower side of the upper clamp (330),
the first supporting member connecting means (215) connected with one end of the multi-joint supporting member (211) and slidably joined to the guide groove (520), and
the fixation member (700) preventing the first supporting member connecting means (215) from slidably moving after the first supporting member connecting means (215) is position-fixed on the guide groove (520), and
the second clamp (320) includes
the upper clamp (330) including clamp ends (500) formed at both ends of the upper clamp (330) and joining holes (510) penetrating the clamp ends (500),
the lower clamp (340) including the clamp ends (500) formed at both ends of the lower clamp (340), the joining holes (510) penetrating the clamp ends (500), and the guide grooves (520) to which the second supporting member connecting means (216) and the fixation member (700) are slidably joined and connected to the lower side of the upper clamp (330),
the second supporting member connecting means (216) connected with the other end of the multi-joint supporting member (211) and slidably joined to the guide groove (520), and
the fixation member (700) preventing the second supporting member connecting means (216) from slidably moving after the second supporting member connecting means (216) is position-fixed on the guide groove (520), and
the fastening means penetrates the joining holes (510) and the upper and lower clamps (330) and (340) are joined to each other to fix the multi-joint supporting m ember (211), the electric wires (221), and the air hoses, and
the conveying projections (215b, 216b, and 700b) are formed in the first and second supporting member connecting means (215) and (216) and one surface of the fixation member (700) and the conveying projections (215b, 216b, and 700b) are inserted into the guide grooves (520), and as a result, the first and second supporting member connecting means (215 and 216) and the fixation member (700) are slidably joined to the guide grooves (520).

4. The cables including a multi-joint supporting member of claim 1 or 3, wherein a pad groove (530) formed so as to position an elastic pad (600) and the elastic pad (600) inserted into the pad groove (530) are further formed on at least one of the inner surfaces of the upper and lower clamps (330 and 340), and
the elastic pad (600) is any one of an elastic pad (600) in which a surface pressing the multi-joint supporting member (211), the electric wire (221), or the air hose (222) positioned between the upper clamp (330) and the lower clamp (340) has a curved shape or an elastic pad (600) which is flat with no curve.

5. The cables including a multi-joint supporting member of claims 1 or 3, wherein in the first and second clamps (310 and 320), the first connection member (10) having a "1" shape or the second connection member (20) having a " 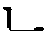 " shape is formed between the upper clamp (330) and the lower clamp (340) in order to control the joining height between the upper clamp (330) and the lower clamp (340),
the first and second joining holes (11) and (21) are formed at positions corresponding to the joining holes (510) formed at the clamp ends (500) in the first and second connection members (10) and (20), and
the fastening means penetrates the joining holes (510) formed at the clamp ends (500) and the first and second joining holes (11) and (21) formed in the first and second connection members (10) and (20) to join the first connection member (10) or the second connection member (20) to the upper and lower clamps (330 and 340).

6. Stacked cables including a multi-joint supporting member, wherein the cables including the multi-joint supporting member disclosed in any one of claims 1 to 5 are stacked in multiple stacking structures, the first clamps (310) constituted in respective layers are joined by joining means and the second clamps (320) constituted in the respective layers are also be joined by the joining means.

7. Stacked cables including a multi-joint supporting member of claim 6, further comprising:
a stacked pod (230) including one or more first pods (231) having a plurality of supporting member inserting portions (210) and one or more second pods (232) positioned above the first pods (231) and having a plurality of electric wire inserting portions (220);
a plurality of multi-joint supporting members (211) inserted into the supporting member inserting portions (210);
a plurality of electric wires (221) inserted into the electric wire inserting portions (220); and
a stacked clamp (400) configured to include a first stacked clamp (410) configured to include a stacked upper clamp (430) and a stacked lower clamp (450), and a plurality of stacked intermediate clamps (440) and a second stacked clamp (420) configured to include a first stacked clamp (410) configured to include the stacked upper clamp (430) and the stacked lower clamp (450), and the plurality of stacked intermediate clamps (440),
the plurality of stacked intermediate clamps (440) are positioned between the stacked upper clamp (430) and the stacked lower clamp (450),
the stacked lower clamp (450) and one or more stacked intermediate clamps (440) constituting the first stacked clamp (410) are joined to accommodate one end of each of the plurality of multi-joint supporting members (211) inserted into the supporting member inserting portions (210) of the first pods (231),
the stacked lower clamp (430) and one or more stacked intermediate clamps (440) constituting the second stacked clamp (420) are joined to accommodate one other ends of the plurality of multi-joint supporting members (211) inserted into the supporting member inserting portions (210) of the first pods (231), and
the stacked lower clamp (430) and one or more stacked intermediate clamps (440) constituting the first stacked clamp (410) and the stacked lower clamp (450) and one or more stacked intermediate clamps (440) constituting the second stacked clamp (420) are joined to each other in order to fix the end of the electric wire (221) inserted into the electric inserting portion (22) of the second pod (232).

8. Stacked cables including a multi-joint supporting member of claim 6, further comprising:
a stacked pod (230) including one or more first pods (231) having a plurality of supporting member inserting portions (210) and one or more second pods (232) positioned above the first pods (231) and having a plurality of electric wire inserting portions (220);
a plurality of multi-joint supporting members (211) inserted into the supporting member inserting portions (210);
a plurality of electric wires (221) inserted into the electric wire inserting portions (220);
one or more air hoses (222) inserted into the electric wire inserting portions (220); and
a stacked clamp (400) configured to include a first stacked clamp (410) configured to include a stacked upper clamp (430) and a stacked lower clamp (450), and a plurality of stacked intermediate clamps (440) and a second stacked clamp (420) configured to include a first stacked clamp (410) configured to include the stacked upper clamp (430) and the stacked lower clamp (450), and the plurality of stacked intermediate clamps (440),
the plurality of stacked intermediate clamps (440) are positioned between the stacked upper clamp (430) and the stacked lower clamp (450),
the stacked lower clamp (450) and one or more stacked intermediate clamps (440) constituting the first stacked clamp (410) are joined to accommodate one end of each of the plurality of multi-joint supporting members (211) inserted into the supporting member inserting portions (210) of the first pods (231),
the stacked lower clamp (430) and one or more stacked intermediate clamps (440) constituting the second stacked clamp (420) are joined to accommodate one other ends of the plurality of multi-joint supporting members (211) inserted into the supporting member inserting portions (210) of the first pods (231), and
the stacked lower clamp (430) and one or more stacked intermediate clamps (440) constituting the first stacked clamp (410) and the stacked lower clamp (450) and one or more stacked intermediate clamps (440) constituting the second stacked clamp (420) are joined to each other in order to fix the ends of the electric wire (221) and the air hose (222) inserted into the electric inserting portion (22) of the second pod (232).

9. The stacked cables of any of the claims 7-8, wherein the first stacked clamp (410) includes
the clamp ends (500) formed in the stacked upper clamp (430) and the stacked lower clamp (450), and both ends of the plurality of stacked intermediate clamp (440),
the joining hole (510) penetrating the clamp end (500),
the guide grooves (520) formed on the inner surfaces of the stacked upper clamp (430) and the stacked lower clamp (450), and the plurality of stacked intermediate clamp (440),
the plurality of first supporting member connecting means (215) connected with one end of the multi-joint supporting member (211) and slidably joined to the guide grooves (520), and
the plurality of fixation members (700) preventing the first supporting member connecting means (215) from slidably moving after the first supporting member connecting means (215) is position-fixed on the guide groove (520), and
the second stacked clamp (300) includes
the clamp ends (500) formed in the stacked upper clamp (430) and the stacked lower clamp (450), and both ends of the plurality of stacked intermediate clamp (440),
the joining hole (510) penetrating the clamp end (500),
the guide grooves (520) formed on the inner surfaces of the stacked upper clamp (430) and the stacked lower clamp (450), and the plurality of stacked intermediate clamp (440),
the plurality of second supporting member connecting means (216) connected with the other end of the multi-joint supporting member (211) and slidably joined to the guide grooves (520), and
the plurality of fixation members (700) preventing the second supporting member connecting means (216) from slidably moving after the second supporting member connecting means (216) is position-fixed on the guide groove (520),
the fastening means penetrates the joining hole (510) and the stacked upper clamp (430) and the stacked lower clamp (450), and the plurality of stacked intermediate clamps (440) are thus joined to each other to fix the multi-joint supporting member (211) and the electric wire (221), and
the conveying projections (215b, 216b, and 700b) are formed in the first and second supporting member connecting means (215 and 216) and one surface of the fixation member (700) and the conveying projections (215b, 216b, and 700b) are inserted into the guide grooves (520), and as a result, the first and second supporting member connecting means (215 and 216) and the fixation member (700) are slidably joined to the guide grooves (520).

10. The stacked cables including a multi-joint supporting member of claim 9 wherein the first and second stacked clamps (410 and 420) further include one or more fixation bars (800) inserted into the guide groove (520) in order to prevent the first and second supporting member connecting means (215 and 216) from moving after the first and second supporting member connecting means (215 and 216) and the fixation member (700) are position-fixed on the guide groove (520).

11. The stacked cables including a multi-joint supporting member of claim 9, wherein on at least one surface of the inner surface of the stacked upper clamp (430) and the inner and outer surfaces of the plurality of stacked intermediate clamps (440) constituting the first stacked clamp (410) and at least one surface of the stacked lower clamp (450) and the inner and outer surfaces of the plurality of stacked intermediate clamps (440) constituting the second stacked clamp (420),
a pad groove (530) which allows an elastic pad (600) to be positioned, and
the elastic pad inserted into the pad groove (530) are further formed, and
the elastic pad (600) is any one of an elastic pad (600) in which a surface pressing the electric wire (221) or the air hose (222) positioned between the stacked lower clamp (450) and the plurality of stacked intermediate clamps (440) of the first and second stacked clamps (410 and 420) has a curved shape or an elastic pad (600) which is flat with no curve.

12. The stacked cables including a multi-joint supporting member of claim 9, wherein the first connection member (10) having a "1" shape or the second connection member (20) having a " 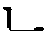 " shape is further constituted between the stacked upper clamp (430) and the stacked lower clamp (450), and the plurality of stacked intermediate clamps (440) in order to control the joining heights between the stacked upper clamp (430) and the stacked lower clamp (450), and the plurality of stacked intermediate clamps (440),
the first and second joining holes (11 and 21) are formed at positions corresponding to the joining holes (510) formed at the clamp ends (500) in the first and second connection members (10 and 20), and
the fastening means penetrates the joining holes (510) formed at the clamp ends (500) and the first and second joining holes (11 and 21) formed in the first and second connection members (10 and 20) to join the first connection member (10) or the second connection member (20) to the stacked upper clamp (430) and the stacked lower clamp (450), and the plurality of stacked intermediate clamps (440).

## Patentansprüche

1. Kabel, die ein Mehrgelenk-Trägerelement enthalten und Folgendes umfassen:
einen Halter (200), der konfiguriert ist, mehrere Trägerelement-Einführungsabschnitte (210), die auf dem Halter (200) gebildet sind, und mehrere Elektrokabel-Einführungsabschnitte (220), die auf dem Halter (200) gebildet sind, zu enthalten;
mehrere Mehrgelenk-Trägerelemente (211), die durch mehrere Einheitsgelenke (212) gebildet sind, die in die Trägerelement-Einführungsabschnitte (210) des Halters (200) eingeführt sind;
mehrere Elektrokabel (221), die in die Elektrokabel-Einführungsabschnitte (220) des Halters (200) eingeführt sind; und
ein Klemmstück (300), das konfiguriert ist, ein erstes Klemmstück (310), das ein Ende des Mehrgelenk-Trägerelements (211) aufnimmt und ein Ende des Elektrokabels (221) arretiert und verbindet, um zu verhindern, dass sich das eine Ende des Elektrokabels (221) horizontal bewegt, und ein zweites Klemmstück (320), das das andere Ende des Mehrgelenk-Trägerelements (211) aufnimmt und das andere Ende des Elektrokabels (221) arretiert und verbindet, um zu verhindern, dass sich das andere Ende des Elektrokabels horizontal bewegt, zu enthalten;
einen oder mehrere Luftschläuche (222), die in die Elektrokabel-Einführungsabschnitte (220) des Halters (200) eingeführt sind; und
wobei das Klemmstück (300) konfiguriert ist zu verhindern, dass sich das eine Ende des Luftschlauchs (222) horizontal bewegt und das zweite Klemmstück (320) den Luftschlauch (222) arretiert und verbindet, um zu verhindern, dass sich das andere Ende horizontal bewegt; und
wobei das Einheitsgelenk (212) an einem Ende des Mehrgelenk-Trägerelements (211) mit dem ersten Klemmstück (310) verbunden ist und das Einheitsgelenk (212) am anderen Ende des Mehrgelenk-Trägerelements (211) mit dem zweiten Klemmstück (320) verbunden ist,
wobei das erste Klemmstück (310) Folgendes enthält:
ein oberes Klemmstück (330), das Klemmstückenden (500), die an beiden Enden des oberen Klemmstücks (330) gebildet sind, und Verbindungslöcher (510), die die Klemmstückenden (500) durchdringen, enthält,
ein unteres Klemmstück (340), das die Klemmstückenden (500), die an beiden Enden des unteren Klemmstücks (340) gebildet sind, und Verbindungslöcher (510), die die Klemmstückenden (500) durchdringen, enthält,
wobei das zweite Klemmstück (320) Folgendes enthält:
ein oberes Klemmstück (330), das Klemmstückenden (500), die an beiden Enden des oberen Klemmstücks (330) gebildet sind, und Verbindungslöcher (510), die die Klemmstückenden (500) durchdringen, enthält,
ein unteres Klemmstück (340), das die Klemmstückenden (500), die an beiden Enden des unteren Klemmstücks (340) gebildet sind, und die Verbindungslöcher (510), die die Klemmstückenden (500) durchdringen, enthält,
**gekennzeichnet durch:**
Führungsrillen (520), mit denen das erste Trägerelement-Verbindungsmittel (215) und ein Arretierungselement (700) gleitend verbunden und mit einer unteren Seite des oberen Klemmstücks (330) verbunden sind, und
das erste Trägerelement-Verbindungsmittel (215), das mit einem Ende des Mehrgelenk-Trägerelements (211) verbunden ist und mit der Führungsrille (520) gleitend verbunden ist, und
ein Arretierungselement (700), das verhindert, dass sich das erste Trägerelement-Verbindungsmittel (215) gleitend bewegt, nachdem das erste Trägerelement-Verbindungsmittel (215) auf der Führungsrille (520) bezüglich der Position arretiert worden ist, und
Führungsrillen (520), mit denen das zweite Trägerelement-Verbindungsmittel (216) und das Arretierungselement (700) gleitend verbunden und mit der unteren Seite des oberen Klemmstücks (330) verbunden sind,
ein zweites Trägerelement-Verbindungsmittel (216), das mit dem anderen Ende des Mehrgelenk-Trägerelements (211) verbunden ist und mit der Führungsrille (520) gleitend verbunden ist, und
ein Arretierungselement (700), das verhindert, dass sich das zweite Trägerelement-Verbindungsmittel (216) gleitend bewegt, nachdem das zweite Trägerelement-Verbindungsmittel (216) auf der Führungsrille (520) bezüglich der Position arretiert worden ist,
ein Befestigungsmittel das Verbindungsloch (510) durchdringt und das obere Klemmstück (330) und das untere Klemmstück (340) miteinander verbunden sind, um die Trägerelemente (211) und die Elektrokabel (221) zu arretieren, und Fördervorsprünge (215b, 216b und 700b) auf dem ersten und zweiten Trägerelement-Verbindungsmittel (215) und (216) und einer Oberfläche des Arretierungselements (700) gebildet sind und die Fördervorsprünge (215b, 216b und 700b) in die Führungsrille (520) eingeführt sind und als ein Ergebnis das erste und das zweite Trägerelement-Verbindungsmittel (215 und 216) und das Arretierungselement (700) in der Führungsrille (520) gleitend miteinander verbunden sind,
wobei das erste und das zweite Klemmstück (310 und 320) ferner einen oder mehrere Arretierungsstäbe (800) enthalten, die in die Führungsrille (520) eingeführt sind, um zu verhindern, dass sich das erste und das zweite Trägerelement-Verbindungsmittel (215 und 216) bewegen, nachdem das erste und das zweite Trägerelement-Verbindungsmittel (215 und 216) und das Arretierungsmittel (700) auf der Führungsrille (520) bezüglich der Position arretiert worden sind.

2. Kabel, die ein Mehrgelenk-Trägerelement enthalten, nach Anspruch 1, wobei das Einheitsgelenk (212) durch einen vorderen Vorsprungsabschnitt (213) und eine Eingriffseinheit (214) des rückwärtigen Endes gebildet ist, ein Eingriffsvorsprung (213a) am vorderen Vorsprungsabschnitt (213) gebildet ist und eine Eingriffsrille (214a) am Eingriffsabschnitt (214) des rückwärtigen Endes gebildet ist.

3. Kabel, die ein Mehrgelenk-Trägerelement enthalten, nach Anspruch 1,
wobei das erste Klemmstück (310) Folgendes enthält:
das obere Klemmstück (330), das Klemmstückenden (500), die an beiden Enden des oberen Klemmstücks (330) gebildet sind, und Verbindungslöcher (510), die die Klemmstückenden (500) durchdringen, enthält,
das untere Klemmstück (340), das die Klemmstückenden (500), die an beiden Enden des unteren Klemmstücks (340) gebildet sind, die Verbindungslöcher (510), die die Klemmstückenden (500) durchdringen, und Führungsrillen (520), mit denen das erste Trägerelement-Verbindungsmittel (215) und das Arretierungselement (700) gleitend verbunden und mit einer unteren Seite des oberen Klemmstücks (330) verbunden sind, enthält,
das erste Trägerelement-Verbindungsmittel (215), das mit einem Ende des Mehrgelenk-Trägerelements (211) verbunden ist und mit der Führungsrille (520) gleitend verbunden ist, und
das Arretierungselement (700), das verhindert, dass sich das erste Trägerelement-Verbindungsmittel (215) gleitend bewegt, nachdem das erste Trägerelement-Verbindungsmittel (215) auf der Führungsrille (520) bezüglich der Position arretiert worden ist, und
wobei das zweite Klemmstück (320) Folgendes enthält:
das obere Klemmstück (330), das Klemmstückenden (500), die an beiden Enden des oberen Klemmstücks (330) gebildet sind, und Verbindungslöcher (510), die die Klemmstückenden (500) durchdringen, enthält,
das untere Klemmstück (340), das die Klemmstückenden (500), die an beiden Enden des unteren Klemmstücks (340) gebildet sind, die Verbindungslöcher (510), die die Klemmstückenden (500) durchdringen, und die Führungsrillen (520), mit denen das zweite Trägerelement-Verbindungsmittel (216) und das Arretierungselement (700) gleitend verbunden und mit der unteren Seite des oberen Klemmstücks (330) verbunden sind, enthält,
das zweite Trägerelement-Verbindungsmittel (216), das mit dem anderen Ende des Mehrgelenk-Trägerelements (211) verbunden ist und mit der Führungsrille (520) gleitend verbunden ist, und
das Arretierungselement (700), das verhindert, dass sich das zweite Trägerelement-Verbindungsmittel (216) gleitend bewegt, nachdem das zweite Trägerelement-Verbindungsmittel (216) auf der Führungsrille (520) bezüglich der Position arretiert worden ist, und
wobei das Befestigungsmittel die Verbindungslöcher (510) durchdringt und das obere und das untere Klemmstück (330) und (340) miteinander verbunden sind, um das Mehrgelenk-Trägerelement (211), die Elektrokabel (221) und die Luftschläuche zu arretieren, und
die Fördervorsprünge (215b, 216b und 700b) im ersten Trägerelement-Verbindungsmittel (215) und im zweiten Trägerelement-Verbindungsmittel (216) und in einer Oberfläche des Arretierungselements (700) gebildet sind und die Fördervorsprünge (215b, 216b und 700b) in die Führungsrillen (520) eingeführt sind und als ein Ergebnis das erste und das zweite Trägerelement-Verbindungsmittel (215 und 216) und das Arretierungselement (700) mit den Führungsrillen (520) gleitend verbunden sind.

4. Kabel, die ein Mehrgelenk-Trägerelement enthalten, nach Anspruch 1 oder 3, wobei eine Pufferrille (530) gebildet ist, um einen elastischen Puffer (600) anzuordnen, und der elastische Puffer (600), der in die Pufferrille (530) eingeführt ist, ferner auf der Innenfläche des oberen und/oder des unteren Klemmstücks (330 und 340) gebildet ist, und
der elastische Puffer (600) ein beliebiger ist aus einem elastischen Puffer (600), in dem eine Fläche, die auf das Mehrgelenk-Trägerelement (211), das Elektrokabel (221) oder den Luftschlauch (222) drückt, die zwischen dem oberen Klemmstück (330) und dem unteren Klemmstück (340) angeordnet sind, eine gekrümmte Form aufweist, oder einem elastischen Puffer (600), der eben ohne Krümmung ist.

5. Kabel, die ein Mehrgelenk-Trägerelement enthalten, nach Anspruch 1 oder 3, wobei im ersten und zweiten Klemmstück (310 und 320) das erste Verbindungselement (10) mit einer "1"-Form oder das zweite Verbindungselement (20) mit einer "L"-Form zwischen dem oberen Klemmstück (330) und dem unteren Klemmstück (340) gebildet ist, um die Verbindungshöhe zwischen dem oberen Klemmstück (330) und dem unteren Klemmstück (340) zu steuern,
wobei das erste und das zweite Verbindungsloch (11) und (21) an Positionen, die den Verbindungslöchern (510) entsprechen, die an den Klemmstückenden (500) gebildet sind, im ersten und zweiten Verbindungselement (10) und (20) gebildet sind, und
das Befestigungsmittel die Verbindungslöcher (510), die an den Klemmstückenden (500) gebildet sind, und das erste und das zweite Verbindungsloch (11) und (21), die im ersten und zweiten Verbindungselement (10) und (20) gebildet sind, durchdringt, um das erste Verbindungselement (10) oder das zweite Verbindungselement (20) mit dem oberen und dem unteren Klemmstück (330 und 340) zu verbinden.

6. Geschichtete Kabel, die ein Mehrgelenk-Trägerelement enthalten, wobei die Kabel, die das Mehrgelenk-Trägerelement nach einem der Ansprüche 1 bis 5 enthalten, in Mehrschichtstrukturen geschichtet sind, die ersten Klemmstücke (310), die in den jeweiligen Schichten gebildet sind, durch Verbindungsmittel verbunden sind und die zweiten Klemmstücke (320), die in den jeweiligen Schichten gebildet sind, ebenfalls durch die Verbindungsmittel verbunden sind.

7. Geschichtete Kabel, die ein Mehrgelenk-Trägerelement enthalten, nach Anspruch 6, die ferner Folgendes umfassen:
einen geschichteten Halter (230), der einen oder mehrere erste Halter (231), die mehrere Trägerelement-Einführungsabschnitte (210) aufweisen, und einen oder mehrere zweite Halter (232), die über den ersten Haltern (231) angeordnet sind und mehrere Elektrokabel-Einführungsabschnitte (220) aufweisen, enthält;
mehrere Mehrgelenk-Trägerelemente (211), die in die Trägerelement-Einführungsabschnitte (210) eingeführt sind;
mehrere Elektrokabel (221), die in die Elektrokabel-Einführungsabschnitte (220) eingeführt sind; und
ein geschichtetes Klemmstück (400), das konfiguriert ist, ein erstes geschichtetes Klemmstück (410), das konfiguriert ist, ein oberes geschichtetes Klemmstück (430) und ein unteres geschichtetes Klemmstück (450) und mehrere geschichtete Zwischenklemmstücke (440) zu enthalten, und ein zweites geschichtetes Klemmstück (420), das konfiguriert ist, ein erstes geschichtetes Klemmstück (410) zu enthalten, das konfiguriert ist, das obere geschichtete Klemmstück (430) und das untere geschichtete Klemmstück (450) und die mehreren geschichteten Zwischenklemmstücke (440) zu enthalten, zu enthalten,
wobei die mehreren geschichteten Zwischenklemmstücke (440) zwischen dem oberen geschichteten Klemmstück (430) und dem unteren geschichteten Klemmstück (450) angeordnet sind,
das untere geschichtete Klemmstück (450) und ein oder mehrere geschichtete Zwischenklemmstücke (440), die das erste geschichtete Klemmstück (410) bilden, verbunden sind, um ein Ende von jedem der mehreren Mehrgelenk-Trägerelemente (211) aufzunehmen, die in die Trägerelement-Einführungsabschnitte (210) der ersten Halter (231) eingeführt sind,
das untere geschichtete Klemmstück (430) und ein oder mehrere geschichtete Zwischenklemmstücke (440), die das zweite geschichtete Klemmstück (420) bilden, verbunden sind, um ein anderes Ende der mehreren Mehrgelenk-Trägerelemente (211) aufzunehmen, die in die Trägerelement-Einführungsabschnitte (210) der ersten Halter (231) eingeführt sind, und
das untere geschichtete Klemmstück (430) und ein oder mehrere geschichtete Zwischenklemmstücke (440), die das erste geschichtete Klemmstück (410) bilden, und das untere geschichtete Klemmstück (450) und ein oder mehrere geschichtete Zwischenklemmstücke (440), die das zweite geschichtete Klemmstück (420) bilden, miteinander verbunden sind, um das Ende des Elektrokabels (221) zu arretieren, das in den elektrischen Einführungsabschnitt (22) des zweiten Halters (232) eingeführt ist.

8. Geschichtete Kabel, die ein Mehrgelenk-Trägerelement enthalten, nach Anspruch 6, die ferner Folgendes umfassen:
einen geschichteten Halter (230), der einen oder mehrere erste Halter (231), die mehrere Trägerelement-Einführungsabschnitte (210) aufweisen, und einen oder mehrere zweite Halter (232), die über den ersten Haltern (231) angeordnet sind und mehrere Elektrokabel-Einführungsabschnitte (220) aufweisen, enthält;
mehrere Mehrgelenk-Trägerelemente (211), die in die Trägerelement-Einführungsabschnitte (210) eingeführt sind;
mehrere Elektrokabel (221), die in die Elektrokabel-Einführungsabschnitte (220) eingeführt sind;
einen oder mehrere Luftschläuche (222), die in die Elektrokabel-Einführungsabschnitte (220) eingeführt sind; und
ein geschichtetes Klemmstück (400), das konfiguriert ist, ein erstes geschichtetes Klemmstück (410), das konfiguriert ist, ein oberes geschichtetes Klemmstück (430) und ein unteres geschichtetes Klemmstück (450) und mehrere geschichtete Zwischenklemmstücke (440) zu enthalten, und ein zweites geschichtetes Klemmstück (420), das konfiguriert ist, ein erstes geschichtetes Klemmstück (410) zu enthalten, das konfiguriert ist, das obere geschichtete Klemmstück (430) und das untere geschichtete Klemmstück (450) und die mehreren geschichteten Zwischenklemmstücke (440) zu enthalten, zu enthalten,
wobei die mehreren geschichteten Zwischenklemmstücke (440) zwischen dem oberen geschichteten Klemmstück (430) und dem unteren geschichteten Klemmstück (450) angeordnet sind,
das untere geschichtete Klemmstück (450) und ein oder mehrere geschichtete Zwischenklemmstücke (440), die das erste geschichtete Klemmstück (410) bilden, verbunden sind, um ein Ende von jedem der mehreren Mehrgelenk-Trägerelemente (211) aufzunehmen, die in die Trägerelement-Einführungsabschnitte (210) der ersten Halter (231) eingeführt sind,
das untere geschichtete Klemmstück (430) und ein oder mehrere geschichtete Zwischenklemmstücke (440), die das zweite geschichtete Klemmstück (420) bilden, verbunden sind, um ein anderes Ende der mehreren Mehrgelenk-Trägerelemente (211) aufzunehmen, die in die Trägerelement-Einführungsabschnitte (210) der ersten Halter (231) eingeführt sind, und
das untere geschichtete Klemmstück (430) und ein oder mehrere geschichtete Zwischenklemmstücke (440), die das erste geschichtete Klemmstück (410) bilden, und das untere geschichtete Klemmstück (450) und ein oder mehrere geschichtete Zwischenklemmstücke (440), die das zweite geschichtete Klemmstück (420) bilden, miteinander verbunden sind, um die Enden des Elektrokabels (221) und des Luftschlauchs (222) zu arretieren, die in den elektrischen Einführungsabschnitt (22) des zweiten Halters (232) eingeführt sind.

9. Geschichtete Kabel nach einem der Ansprüche 7-8, wobei das erste geschichtete Klemmstück (410) Folgendes enthält:
die Klemmstückenden (500), die im oberen geschichteten Klemmstück (430) und im unteren geschichteten Klemmstück (450) und in beiden Enden der mehreren geschichteten Zwischenklemmstücke (440) gebildet sind,
das Verbindungsloch (510), das das Klemmstückende (500) durchdringt,
die Führungsrillen (520), die auf den Innenflächen des oberen geschichteten Klemmstücks (430) und des unteren geschichteten Klemmstücks (450) und den mehreren geschichteten Zwischenklemmstücken (440) gebildet sind,
die mehreren ersten Trägerelement-Verbindungsmittel (215), die mit einem Ende des Mehrgelenk-Trägerelements (211) verbunden sind und mit den Führungsrillen (520) gleitend verbunden sind, und
die mehreren Arretierungselemente (700), die verhindern, dass sich das erste Trägerelement-Verbindungsmittel (215) gleitend bewegt, nachdem das erste Trägerelement-Verbindungsmittel (215) auf der Führungsrille (520) bezüglich der Position arretiert worden ist, und
wobei das zweite geschichtete Klemmstück (300) Folgendes enthält:
die Klemmstückenden (500), die im oberen geschichteten Klemmstück (430) und im unteren geschichteten Klemmstück (450) und in beiden Enden der mehreren geschichteten Zwischenklemmstücke (440) gebildet sind,
das Verbindungsloch (510), das das Klemmstückende (500) durchdringt,
die Führungsrillen (520), die auf den Innenflächen des oberen geschichteten Klemmstücks (430) und des unteren geschichteten Klemmstücks (450) und den mehreren geschichteten Zwischenklemmstücken (440) gebildet sind,
die mehreren zweiten Trägerelement-Verbindungsmittel (216), die mit dem anderen Ende des Mehrgelenk-Trägerelements (211) verbunden sind und mit den Führungsrillen (520) gleitend verbunden sind, und
die mehreren Arretierungselemente (700), die verhindern, dass sich das zweite Trägerelement-Verbindungsmittel (216) gleitend bewegt, nachdem das zweite Trägerelement-Verbindungsmittel (216) auf der Führungsrille (520) bezüglich der Position arretiert worden ist,
wobei das Befestigungsmittel das Verbindungsloch (510) durchdringt und das obere geschichtete Klemmstück (430) und das untere geschichtete Klemmstück (450) und die mehreren geschichteten Zwischenklemmstücke (440) somit miteinander verbunden sind, um das Mehrgelenk-Trägerelement (211) und das Elektrokabel (221) zu arretieren, und
die Fördervorsprünge (215b, 216b und 700b) im ersten und zweiten Trägerelement-Verbindungsmittel (215) und (216) und in einer Oberfläche des Arretierungselements (700) gebildet sind und die Fördervorsprünge (215b, 216b und 700b) in die Führungsrillen (520) eingeführt sind und als ein Ergebnis das erste und das zweite Trägerelement-Verbindungsmittel (215 und 216) und das Arretierungselement (700) mit den Führungsrillen (520) gleitend verbunden sind.

10. Geschichtete Kabel, die ein Mehrgelenk-Trägerelement enthalten, nach Anspruch 9, wobei das erste und das zweite geschichtete Klemmstück (410 und 420) ferner einen oder mehrere Arretierungsstäbe (800) enthalten, die in die Führungsrille (520) eingeführt sind, um zu verhindern, dass sich das erste und das zweite Trägerelement-Verbindungsmittel (215 und 216) bewegen, nachdem das erste und das zweite Trägerelement-Verbindungsmittel (215 und 216) und das Arretierungsmittel (700) auf der Führungsrille (520) bezüglich der Position arretiert worden sind.

11. Geschichtete Kabel, die ein Mehrgelenk-Trägerelement enthalten, nach Anspruch 9, wobei auf mindestens einer Oberfläche der Innenfläche des oberen geschichteten Klemmstücks (430) und der Innen- und Außenflächen der mehreren geschichteten Zwischenklemmstücke (440), die das erste geschichtete Klemmstück (410) bilden, und mindestens einer Oberfläche des unteren geschichteten Klemmstücks (450) und der Innen- und Außenflächen der mehreren geschichteten Zwischenklemmstücke (440), die das zweite geschichtete Klemmstück bilden, ferner
eine Pufferrille (530), die ermöglicht, dass ein elastischer Puffer (600) angeordnet ist, und
der elastische Puffer, der in die Pufferrille (530) eingeführt ist,
gebildet sind, und
der elastische Puffer (600) ein beliebiger ist aus einem elastischen Puffer (600), in dem eine Fläche, die auf das Elektrokabel (221) oder den Luftschlauch (222) drückt, die zwischen dem unteren geschichteten Klemmstück (450) und den mehreren geschichteten Zwischenklemmstücken (440) des ersten und zweiten geschichteten Klemmstücks (410 und 420) angeordnet sind, eine gekrümmte Form aufweist, oder einem elastischen Puffer (600), der eben ohne Krümmung ist.

12. Geschichtete Kabel, die ein Mehrgelenk-Trägerelement enthalten, nach Anspruch 9, wobei das erste Verbindungselement (10) mit einer "l"-Form oder das zweite Verbindungselement (20) mit einer "L"-Form zwischen dem oberen geschichteten Klemmstück (430) und dem unteren geschichteten Klemmstück (450) und den mehreren geschichteten Zwischenklemmstücken (440) gebildet ist, um die Verbindungshöhen zwischen dem oberen geschichteten Klemmstück (430) und dem unteren geschichteten Klemmstück (450) und den mehreren Zwischenklemmstücken (440) zu steuern,
wobei das erste und das zweite Verbindungsloch (11) und (21) an Positionen, die den Verbindungslöchern (510) entsprechen, die an den Klemmstückenden (500) gebildet sind, im ersten und zweiten Verbindungselement (10) und (20) gebildet sind, und
das Befestigungsmittel die Verbindungslöcher (510), die an den Klemmstückenden (500) gebildet sind, und das erste und das zweite Verbindungsloch (11 und 21), die im ersten und zweiten Verbindungselement (10 und 20) gebildet sind, durchdringt, um das erste Verbindungselement (10) oder das zweite Verbindungselement (20) mit dem oberen geschichteten Klemmstück (430) und dem unteren geschichteten Klemmstück (450) und den mehreren geschichteten Zwischenklemmstücken (440) zu verbinden.

## Revendications

1. Câbles comprenant un élément de support à plusieurs articulations, comportant:
une nacelle (200) configurée de façon à comprendre une pluralité de parties d'insertion d'éléments de support (210) formées sur la nacelle (200) et une pluralité de parties d'insertion de fils électriques (220) formées sur la nacelle (200);
une pluralité d'éléments de support à plusieurs articulations (211) constitués par des articulations unitaires multiples (212), insérés dans les parties d'insertion d'éléments de support (210) de la nacelle (200) ;
une pluralité de fils électriques (221) insérés dans les parties d'insertion de fils électriques (220) de la nacelle (200) ; et
un serre-fils (300) configuré de façon à comprendre un premier serre-fils (310) recevant une extrémité de l'élément de support à plusieurs articulations (211) et fixant et joignant une extrémité du fil électrique (221) afin d'empêcher cette une extrémité du fil électrique (221) de bouger horizontalement et un deuxième serre-fils (320) recevant l'autre extrémité de l'élément de support à plusieurs articulations (211) et fixant et joignant l'autre extrémité du fil électrique (221) afin d'empêcher l'autre extrémité du fil électrique de bouger horizontalement;
un ou plusieurs tuyaux d'air (222) insérés dans les parties d'insertion de fils électriques (220) de la nacelle (200); et
le serre-fils (300) étant configuré de façon à empêcher l'une extrémité du tuyau d'air (222) de bouger horizontalement et le deuxième serre-fils (320) fixant et joignant le tuyau d'air (222) afin d'empêcher l'autre extrémité de bouger horizontalement; et
l'articulation unitaire (212) à une extrémité de l'élément de support à plusieurs articulations (211) étant reliée au premier serre-fils (310) et l'articulation unitaire (212) à l'autre extrémité de l'élément de support à plusieurs articulations (211) étant reliée au deuxième serre-fils (320),
le premier serre-fils (310) comprenant:
un serre-fils supérieur (330) comprenant des extrémités de serre-fils (500) formées aux deux extrémités du serre-fils supérieur (330) et des trous de jonction (510) pénétrant dans les extrémités du serre-fils (500),
un serre-fils inférieur (340) comprenant les extrémités de serre-fils (500) formées aux deux extrémités du serre-fils inférieur (340) et des trous de jonction (510) pénétrant dans les extrémités du serre-fils (500),
le deuxième serre-fils (320) comprenant un serre-fils supérieur (330) comprenant des extrémités de serre-fils (500) formées aux deux extrémités du serre-fils supérieur (330) et des trous de jonction (510) pénétrant dans les extrémités de serre-fils (500), un serre-fils inférieur (340) comprenant les extrémités de serre-fils (500) formées aux deux extrémités du serre-fils inférieur (340), les trous de jonction (510) pénétrant dans les extrémités de serre-fils,
**caractérisé par:**
des gorges de guidage (520) auxquelles le premier moyen de liaison d'éléments de support (215) et un élément de fixation (700) sont joints de manière coulissante et reliées à un côté inférieur du serre-fils supérieur (330),
le premier moyen de liaison d'éléments de support (215) relié à une extrémité de l'élément de support à plusieurs articulations (211) et joint de manière coulissante à la gorge de guidage (520), et
un élément de fixation (700) empêchant le premier moyen de liaison d'éléments de support (215) de bouger de manière coulissante après que la position du premier moyen de liaison d'éléments de support (215) a été fixée sur la gorge de guidage (520), et
des gorges de guidage (520) auxquelles le deuxième moyen de liaison d'éléments de support (216) et l'élément de fixation (700) sont joints de manière coulissante et reliées au côté inférieur du serre-fils supérieur (330),
un deuxième moyen de liaison d'éléments de support (216) relié à l'autre extrémité de l'élément de support à plusieurs articulations (211) et joint de manière coulissante à la gorge de guidage (520), et
un élément de fixation (700) empêchant le deuxième moyen de liaison d'éléments de support (216) de bouger de manière coulissante après que la position du deuxième moyen de liaison d'éléments de support (216) a été fixée sur la gorge de guidage (520), et
un moyen d'attache pénètre dans le trou de jonction (510) et les serre-fils supérieur et inférieur (330) et (340) étant joints l'un à l'autre pour fixer les éléments de support (211) et les fils électriques (221) et des saillies de transport (215b, 216b et 700b) étant formées sur le premier et le deuxième moyen de liaison d'éléments de support (215) et (216) et sur une surface de l'élément de fixation (700) et les saillies de transport (215b, 216b et 700b) étant insérées dans la gorge de guidage (520), et, en conséquence, le premier et le deuxième moyen de liaison d'éléments de support (215 et 216) et l'élément de fixation (700) étant joints l'un à l'autre de manière coulissante dans la gorge de guidage (520),
le premier et le deuxième serre-fils (310 et 320) comprenant en outre une ou plusieurs barres de fixation (800) insérées dans la gorge de guidage (520) afin d'empêcher le premier et le deuxième moyen de liaison d'éléments de support (215 et 216) de bouger après que les positions du premier et du deuxième moyen de liaison d'éléments de support (215 et 216) et de l'élément de fixation (700) ont été fixées dans la gorge de guidage (520) .

2. Des câbles comprenant un élément de support à plusieurs articulations selon la revendication 1, l'articulation unitaire (212) étant constituée par une partie saillie avant (213) et une unité d'engagement avec l'extrémité arrière (214), une saillie d'engagement (213a) étant formée au niveau de la partie saillie avant (213) et une gorge d'engagement (214a) étant formée au niveau de la partie d'engagement avec l'extrémité arrière (214).

3. Des câbles comprenant un élément de support à plusieurs articulations selon la revendication 1, le premier serre-fils (310) comprenant :
le serre-fils supérieur (330) comprenant des extrémités de serre-fils (500) formées aux deux extrémités du serre-fils supérieur (330) et des trous de jonction (510) pénétrant dans les extrémités de serre-fils (500),
le serre-fils inférieur (340) comprenant les extrémités de serre-fils (500) formées aux deux extrémités du serre-fils inférieur (340), les trous de jonction (510) pénétrant dans les extrémités de serre-fils (500), et des gorges de guidage (520) auxquelles le premier moyen de liaison d'éléments de support (215) et l'élément de fixation (700) sont joints de manière coulissante et reliées à un côté inférieur de serre-fils supérieur (330),
le premier moyen de liaison d'éléments de support (215) relié à une extrémité de l'élément de support à plusieurs articulations (211) et joint de manière coulissante à la gorge de guidage (520), et
l'élément de fixation (700) empêchant le premier moyen de liaison d'éléments de support (215) de bouger de manière coulissante après que la position du premier moyen de liaison d'éléments de support (215) a été fixée sur la gorge de guidage (520), et
le deuxième serre-fils (320) comprenant :
le serre-fils supérieur (330) comprenant des extrémités de serre-fils (500) formées aux deux extrémités du serre-fils supérieur (330) et des trous de jonction (510) pénétrant dans les extrémités de serre-fils (500),
le serre-fils inférieur (340) comprenant les extrémités de serre-fils (500) formées aux deux extrémités du serre-fils inférieur (340), les trous de jonction (510) pénétrant dans les extrémités de serre-fils (500), et les gorges de guidage (520) auxquelles le deuxième moyen de liaison d'éléments de support (216) et l'élément de fixation (700) sont joints de manière coulissante et reliées à un côté inférieur de serre-fils supérieur (330),
le deuxième moyen de liaison d'éléments de support (216) relié à l'autre extrémité de l'élément de support à plusieurs articulations (211) et joint de manière coulissante à la gorge de guidage (520), et
l'élément de fixation (700) empêchant le deuxième moyen de liaison d'éléments de support (216) de bouger de manière coulissante après que la position du deuxième moyen de liaison d'éléments de support (216) a été fixée sur la gorge de guidage (520), et
le moyen de fixation pénétrant dans les trous de jonction (510) et les serre-fils supérieur et inférieur (330) et (340) étant joints l'un à l'autre pour fixer l'élément de support à plusieurs articulations (211), les fils électriques (221) et les tuyaux d'air, et
les saillies de transport (215b, 216b et 700b) étant formées dans le premier et le deuxième moyen de liaison d'éléments de support (215) et (216) et dans une surface de l'élément de fixation (700) et les saillies de transport (215b, 216b et 700b) étant insérées dans les gorges de guidage (520), et, en conséquence, le premier et le deuxième moyen de liaison d'éléments de support (215 et 216) et l'élément de fixation (700) étant joints de manière coulissante aux gorges de guidage (520).

4. Des câbles comprenant un élément de support à plusieurs articulations selon la revendication 1 ou 3, dans lequel une gorge pour tampon (530) formée de façon à positionner un tampon élastique (600) et ce tampon élastique (600) inséré dans la gorge pour tampon (530) sont formés en outre sur au moins une des surfaces internes des serre-fils supérieur et inférieur (330 et 340), et
le tampon élastique (600) est soit un tampon élastique (600) dans lequel une surface pressant sur l'élément de support à plusieurs articulations (211), le fil électrique (221), ou le tuyau d'air (222) positionnés entre le serre-fils supérieur (330) et le serre-fils inférieur (340) a une forme incurvée, soit un tampon élastique (600) qui est plat sans courbure.

5. Des câbles comprenant un élément de support à plusieurs articulations selon la revendication 1 ou 3, dans lequel, dans le premier et le deuxième serre-fils (310 et 320), le premier élément de liaison (10) ayant une forme en "1" ou le deuxième élément de liaison (20) ayant une forme en "L" est formé entre le serre-fils supérieur (330) et le serre-fils inférieur (340) afin de contrôler la hauteur de jonction entre le serre-fils supérieur (330) et le serre-fils inférieur (340),
le premier et le deuxième trou de jonction (11) et (21) sont formés dans des positions correspondant aux trous de jonction (510) formés au niveau des extrémités de serre-fils (500) dans le premier et le deuxième élément de liaison (10) et (20), et
le moyen de fixation pénètre dans les trous de jonction (510) formés au niveau des extrémités de serre-fils (500) et dans le premier et le deuxième trou de jonction (11) et (21) formés dans le premier et le deuxième élément de liaison (10) et (20) pour joindre le premier élément de liaison (10) ou le deuxième élément de liaison (20) aux serre-fils supérieur et inférieur (330 et 340).

6. Câbles empilés comprenant un élément de support à plusieurs articulations, ces câbles comprenant l'élément de support à plusieurs articulations divulgué dans l'une quelconque des revendications 1 à 5 étant empilés dans des structures d'empilement multiples, les premiers serre-fils (310) constitués dans des couches respectives étant joints par un moyen de jonction et les deuxièmes serre-fils (320) constitués dans les couches respectives étant aussi joints par ce moyen de jonction.

7. Câbles empilés comprenant un élément de support à plusieurs articulations selon la revendication 6, comprenant en outre:
une nacelle empilée (230) comprenant une ou plusieurs premières nacelles (231) ayant une pluralité de parties d'insertion d'éléments de support (210) et une ou plusieurs deuxièmes nacelles (232) positionnées au-dessus des premières nacelles (231) et ayant une pluralité de parties d'insertion de fils électriques (220) ;
une pluralité d'éléments de support à plusieurs articulations (211) insérés dans les parties d'insertion d'éléments de support (210);
une pluralité de fils électriques (221) insérés dans les parties d'insertion de fils électriques (220); et
un serre-fils empilé (400) configuré de façon à comprendre un premier serre-fils empilé (410) configuré de façon à comprendre un serre-fils supérieur empilé (430) et un serre-fils inférieur empilé (450), et une pluralité de serre-fils intermédiaires empilés (440) et un deuxième serre-fils empilé (420) configuré de façon à comprendre un premier serre-fils empilé (410) configuré de façon à comprendre le serre-fils supérieur empilé (430) et le serre-fils inférieur empilé (450), et la pluralité de serre-fils intermédiaires empilés (440),
la pluralité de serre-fils intermédiaires empilés (440) étant positionnés entre le serre-fils supérieur empilé (430) et le serre-fils inférieur empilé (450),
le serre-fils inférieur empilé (450) et un ou plusieurs serre-fils intermédiaires empilés (440) constituant le premier serre-fils empilé (410) étant joints de façon à recevoir une extrémité de chacun de la pluralité d'éléments de support à plusieurs articulations (211) insérés dans les parties d'insertion d'éléments de support (210) des premières nacelles (231),
le serre-fils inférieur empilé (430) et un ou plusieurs serre-fils intermédiaires empilés (440) constituant le deuxième serre-fils empilé (420) étant joints de façon à recevoir une autre extrémité de la pluralité d'éléments de support à plusieurs articulations (211) insérés dans les parties d'insertion d'éléments de support (210) des premières nacelles (231), et
le serre-fils inférieur empilé (430) et un ou plusieurs serre-fils intermédiaires empilés (440) constituant le premier serre-fils empilé (410) et le serre-fils inférieur empilé (450) et un ou plusieurs serre-fils intermédiaires empilés (440) constituant le deuxième serre-fils empilé (420) étant joints l'un à l'autre de façon à fixer l'extrémité du fil électrique (221) inséré dans la partie d'insertion électrique (22) de la deuxième nacelle (232).

8. Câbles empilés comprenant un élément de support à plusieurs articulations selon la revendication 6, comprenant en outre :
une nacelle empilée (230) comprenant une ou plusieurs premières nacelles (231) ayant une pluralité de parties d'insertion d'éléments de support (210) et une ou plusieurs deuxièmes nacelles (232) positionnées au-dessus des premières nacelles (231) et ayant une pluralité de parties d'insertion de fils électriques (220) ;
une pluralité d'éléments de support à plusieurs articulations (211) insérés dans les parties d'insertion d'éléments de support (210);
une pluralité de fils électriques (221) insérés dans les parties d'insertion de fils électriques (220) ;
un ou plusieurs tuyaux d'air (222) insérés dans les parties d'insertion de fils électriques (220); et
un serre-fils empilé (400) configuré de façon à comprendre un premier serre-fils empilé (410) configuré de façon à comprendre un serre-fils supérieur empilé (430) et un serre-fils inférieur empilé (450), et une pluralité de serre-fils intermédiaires empilés (440) et un deuxième serre-fils empilé (420) configuré de façon à comprendre un premier serre-fils empilé (410) configuré de façon à comprendre le serre-fils supérieur empilé (430) et le serre-fils inférieur empilé (450), et la pluralité de serre-fils intermédiaires empilés (440),
la pluralité de serre-fils intermédiaires empilés (440) étant positionnés entre le serre-fils supérieur empilé (430) et le serre-fils inférieur empilé (450),
le serre-fils inférieur empilé (450) et un ou plusieurs serre-fils intermédiaires empilés (440) constituant le premier serre-fils empilé (410) étant joints de façon à recevoir une extrémité de chacun de la pluralité d'éléments de support à plusieurs articulations (211) insérés dans les parties d'insertion d'éléments de support (210) des premières nacelles (231),
le serre-fils inférieur empilé (430) et un ou plusieurs serre-fils intermédiaires empilés (440) constituant le deuxième serre-fils empilé (420) étant joints de façon à recevoir une autre extrémité de la pluralité d'éléments de support à plusieurs articulations (211) insérés dans les parties d'insertion d'éléments de support (210) des premières nacelles (231), et
le serre-fils inférieur empilé (430) et un ou plusieurs serre-fils intermédiaires empilés (440) constituant le premier serre-fils empilé (410) et le serre-fils inférieur empilé (450) et un ou plusieurs serre-fils intermédiaires empilés (440) constituant le deuxième serre-fils empilé (420) étant joints l'un à l'autre de façon à fixer les extrémités du fil électrique (221) et du tuyau d'air (222) insérés dans la partie d'insertion électrique (22) de la deuxième nacelle (232) .

9. Câbles empilés selon l'une quelconque des revendications 7 à 8, dans lequel le premier serre-fils empilé (410) comprend:
les extrémités de serre-fils (500) formées dans le serre-fils supérieur empilé (430) et le serre-fils inférieur empilé (450), et les deux extrémités du serre-fils intermédiaire empilé (440),
le trou de jonction (510) pénétrant dans l'extrémité de serre-fils (500),
les gorges de guidage (520) formées sur les surfaces internes du serre-fils supérieur empilé (430) et du serre-fils inférieur empilé (450), et la pluralité de serre-fils intermédiaires empilés (440),
la pluralité de premiers moyens de liaison d'éléments de support (215) reliés à une extrémité de l'élément de support à plusieurs articulations (211) et joints de manière coulissante aux gorges de guidage (520), et
la pluralité d'éléments de fixation (700) empêchant le premier moyen de liaison d'éléments de support (215) de bouger de manière coulissante après que la position du premier moyen de liaison d'éléments de support (215) a été fixée sur la gorge de guidage (520), et
le deuxième serre-fils empilé (300) comprend:
les extrémités de serre-fils (500) formées dans le serre-fils supérieur empilé (430) et le serre-fils inférieur empilé (450), et les deux extrémités de la pluralité de serre-fils intermédiaires empilés (440),
le trou de jonction (510) pénétrant dans l'extrémité de serre-fils (500),
les gorges de guidage (520) formées sur les surfaces internes du serre-fils supérieur empilé (430) et du serre-fils inférieur empilé (450), et la pluralité de serre-fils intermédiaires empilés (440),
la pluralité de deuxièmes moyens de liaison d'éléments de support (216) reliés à l'autre extrémité de l'élément de support à plusieurs articulations (211) et joints de manière coulissante aux gorges de guidage (520), et
la pluralité d'éléments de fixation (700) empêchant le deuxième moyen de liaison d'éléments de support (216) de bouger de manière coulissante après que la position du deuxième moyen de liaison d'éléments de support (216) a été fixée sur la gorge de guidage (520),
le moyen de fixation pénétrant dans le trou de jonction (510) et le serre-fils supérieur empilé (430) et le serre-fils inférieur empilé (450), et la pluralité de serre-fils intermédiaires empilés (440) étant ainsi joints l'un à l'autre pour fixer l'élément de support à plusieurs articulations (211) et le fil électrique (221), et
les saillies de transport (215b, 216b et 700b) étant formées dans le premier et le deuxième moyen de liaison d'éléments de support (215 et 216) et dans une surface de l'élément de fixation (700) et les saillies de transport (215b, 216b et 700b) étant insérées dans les gorges de guidage (520), et, en conséquence, le premier et le deuxième moyen de liaison d'éléments de support (215 et 216) et l'élément de fixation (700) étant joints de manière coulissante aux gorges de guidage (520).

10. Des câbles empilés comprenant un élément de support à plusieurs articulations selon la revendication 9, le premier et le deuxième serre-fils (410 et 420) comprenant en outre une ou plusieurs barres de fixation (800) insérées dans la gorge de guidage (520) afin d'empêcher le premier et le deuxième moyen de liaison d'éléments de support (215 et 216) de bouger après que les positions du premier et du deuxième moyen de liaison d'éléments de support (215 et 216) et de l'élément de fixation (700) ont été fixées dans la gorge de guidage (520).

11. Des câbles empilés comprenant un élément de support à plusieurs articulations selon la revendication 9, dans lesquels, sur au moins une surface de la surface interne du serre-fils supérieur empilé (430) et sur les surfaces internes et externes de la pluralité de serre-fils intermédiaires empilés (440) constituant le premier serre-fils empilé (410) et sur au moins une surface du serre-fils inférieur empilé (450) et sur les surfaces internes et externes de la pluralité de serre-fils intermédiaires empilés (440) constituant le deuxième serre-fils empilé (420),
une gorge de tampon (530) qui permet à un tampon élastique (600) d'être positionné, et
le tampon élastique inséré dans le gorge du tampon (530) sont formés en outre, et
le tampon élastique (600) est soit un tampon élastique (600) dans lequel une surface pressant sur le fil électrique (221) ou sur le tuyau d'air (222) positionnés entre le serre-fils inférieur empilé (450) et la pluralité de serre-fils intermédiaires empilés (440) du premier et du deuxième serre-fils empilés (410 et 420) a une forme incurvée, soit un tampon élastique (600) qui est plat sans courbure.

12. Des câbles empilés comprenant un élément de support à plusieurs articulations selon la revendication 9, le premier élément de liaison (10) ayant une forme en "1" ou le deuxième élément de liaison (20) ayant une forme en "L" étant constitués en outre entre le serre-fils supérieur empilé (430) et le serre-fils inférieur empilé (450), et la pluralité de serre-fils intermédiaires empilés (440) afin de contrôler les hauteurs de jonction entre le serre-fils supérieur empilé (430) et le serre-fils inférieur empilé (450), et la pluralité de serre-fils intermédiaires empilés (440),
le premier et le deuxième trou de jonction (11 et 21) étant formés dans des positions correspondant aux trous de jonction (510) formés au niveau des extrémités de serre-fils (500) dans le premier et le deuxième élément de liaison (10 et 20), et
le moyen de fixation pénétrant dans les trous de jonction (510) formés au niveau des extrémités de serre-fils (500) et le premier et le deuxième trou de jonction (11 et 21) formés dans le premier et le deuxième élément de liaison (10 et 20) pour joindre le premier élément de liaison (10) ou le deuxième élément de liaison (20) aux serre-fils supérieur empilé (430) et au serre-fils inférieur empilé (450), et à la pluralité de serre-fils intermédiaires empilés (440).
